(19) Europäisches Patentamt
European Patent Office
Office européen des brevets

(11) EP 4 629 194 A1

(12) EUROPEAN PATENT APPLICATION

(43) Date of publication:
**08.10.2025 Bulletin 2025/41**

(21) Application number: **25156746.7**

(22) Date of filing: **10.02.2025**

(51) International Patent Classification (IPC):
***G06V 20/56*** *(2022.01)* ***G06V 20/58*** *(2022.01)*
***G06V 10/62*** *(2022.01)* ***B66C 13/46*** *(2006.01)*
***G06T 7/277*** *(2017.01)*

(52) Cooperative Patent Classification (CPC):
**G06V 20/56; B66C 13/40; B66C 13/46; G06T 7/277; G06V 10/62; G06V 20/58;**
G06T 2207/10016; G06T 2207/30261

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.04.2024 JP 2024061539**
**18.12.2024 JP 2024221364**

(71) Applicant: **Panasonic Intellectual Property Management Co., Ltd.**
**Kadoma-shi, Osaka 571-0057 (JP)**

(72) Inventors:
- **ANABUKI, Motoshi**
**Osaka, 571-8501 (JP)**
- **JOHN, Stephen William**
**Osaka, 571-8501 (JP)**
- **TASAKI, Nobuaki**
**Osaka, 571-8501 (JP)**
- **ARAI, Toshiya**
**Osaka, 571-8501 (JP)**
- **KUHARA, Shunsuke**
**Osaka, 571-8501 (JP)**
- **OTANI, Masashi**
**Osaka, 571-0057 (JP)**

(74) Representative: **Eisenführ Speiser**
**Patentanwälte Rechtsanwälte PartGmbB**
**Postfach 10 60 78**
**28060 Bremen (DE)**

# (54) METHOD OF REMOTE CONTROL, TERMINAL DEVICE, AND PROGRAM

(57) A method of remote control according to the present disclosure includes outputting prediction region information indicating a region, in an image, in which a moving object is predicted to be likely to be present based on delay information indicating a time from when the image is captured to when the image is drawn and a position of the moving object caught in the image.

FIG.1

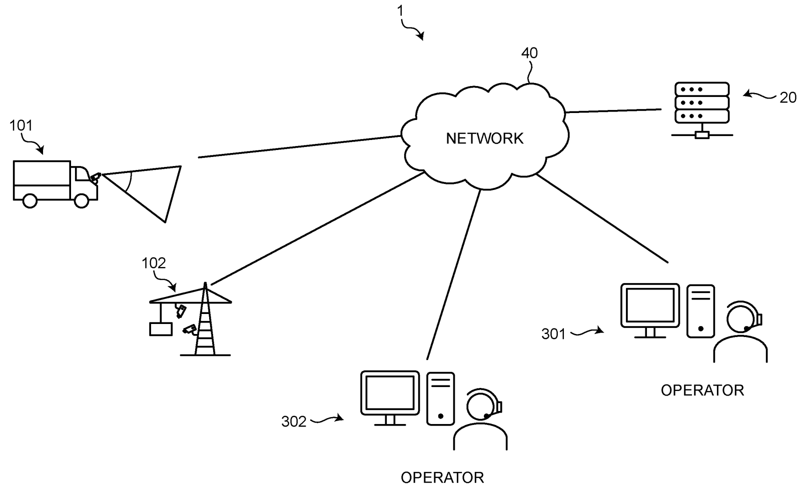




Processed by Luminess, 75001 PARIS (FR)

## Description

### FIELD

The present disclosure relates to a method of remote control, a terminal device, and a program.

### BACKGROUND

In recent years, services by various types of autonomous traveling vehicles have been put into practical use, and development of a remote control system capable of remotely monitoring or operating these vehicles has been advanced. In the remote control system, in a case where there is a request for assistance by the remote operation from the autonomous traveling vehicle, the operator in the remote control room can perform assistance such as moving the autonomous traveling vehicle by remotely controlling the vehicle while viewing the image captured by the camera mounted on the autonomous traveling vehicle.

Related techniques are described in JP 2000-313588 A, JP 7070802 B, JP 2019-156527 A, JP 2005-145632 A, JP 2007-31102 A, WO 2017/135382 A, and JP 2023-79739 A.

For example, in an autonomous driving solution of a harbor, a method of remotely performing cooperative operation between a crane and an autonomous driving truck has been studied. A crane uses a crane hook to lift a load such as a container loaded on an autonomous driving truck and transport the load to a predetermined position.

At this time, in the remote operation of the crane, it is essential to accurately display the position so that the crane hook does not come into contact with an object such as a surrounding worker or an obstacle, but since there is a delay until the display in the remote monitoring, the operator who remotely operates the crane may not be able to grasp the accurate current position. In addition, since the operator operates the crane over the image, it is difficult to grasp a sense of distance, and there is a possibility that the operator erroneously recognizes a positional relationship with surrounding workers and vehicles. Furthermore, the movement of the crane hook may be unpredictable due to the influence of wind or inertia.

An object of the present disclosure is to provide a method of remote control capable of appropriately supporting a remote operation of an operator, a terminal device, and a program.

### SUMMARY

In order to achieve the above object, a method of remote control according to the present disclosure includes outputting prediction region information indicating a region, in an image, in which a moving object is predicted to be likely to be present based on delay information indicating a time from when the image is captured to when the image is drawn and a position of the moving object caught in the image.

According to the present disclosure, it is possible to appropriately support the remote operation by the operator. Note that the effects described herein are not necessarily limited, and may be any of the effects described in the present specification.

### BRIEF DESCRIPTION OF THE DRAWINGS

FIG. 1 is a diagram illustrating an example of a schematic configuration of a remote operation system according to the embodiment;
FIG. 2 is an activity diagram illustrating an example of an overall operation flow of the remote operation system according to the embodiment;
FIG. 3 is an activity diagram illustrating an example of an overall operation flow of the remote operation system according to the embodiment;
FIG. 4 is a diagram illustrating an example of a configuration of each of a plurality of devices included in the remote operation system according to the embodiment;
FIG. 5 is a diagram illustrating an example of a hardware configuration of the control device according to the embodiment;
FIG. 6 is a table for describing delay information according to the embodiment;
FIG. 7 is a schematic diagram for describing a position of the crane hook according to the embodiment;
FIG. 8 is a schematic diagram illustrating an example of a camera image according to the embodiment;
FIG. 9 is a table illustrating an example of crane hook distance calculation information according to the embodiment;
FIG. 10 is a schematic diagram illustrating an example of prediction region information according to an embodiment;
FIG. 11 is a schematic diagram illustrating an example of prediction region information according to an embodiment;
FIG. 12 is a schematic diagram illustrating a positional relationship between a region of prediction region information and a surrounding object according to the embodiment;
FIG. 13 is a table illustrating an example of vehicle height information according to the embodiment;
FIG. 14 is a schematic diagram illustrating an example of a display screen according to an embodiment;
FIG. 15 is a schematic diagram illustrating an example of a display screen according to an embodiment;
FIG. 16 is a schematic diagram illustrating an example of a display screen according to an embodiment;
FIG. 17 is a flowchart illustrating an example of processing of the remote operation support device according to the embodiment;

FIG. 18 is a schematic diagram illustrating an example of a display screen according to the first modification;

FIG. 19 is a schematic diagram illustrating an example of a display screen according to the second modification;

FIG. 20 is a diagram illustrating an example of a configuration of each of a plurality of devices included in a remote operation system according to the third modification;

FIG. 21 is a table illustrating an example of position information of a vehicle according to the third modification;

FIG. 22 is a schematic diagram for explaining a surrounding object according to the third modification;

FIG. 23 is a schematic diagram illustrating an example of a display screen according to the third modification;

FIG. 24 is a schematic diagram illustrating an example of a display screen according to the third modification;

FIG. 25 is a flowchart illustrating an example of processing of a remote operation support device according to the third modification;

FIG. 26 is a table for explaining an example of alert information according to the fourth modification;

FIG. 27 is a flowchart illustrating an example of processing of a remote operation support device according to the fourth modification;

FIG. 28 is a schematic diagram for explaining control for restricting autonomous traveling according to the fifth modification;

FIG. 29 is a schematic diagram for explaining control for restricting autonomous traveling according to the fifth modification;

FIG. 30 is a schematic diagram illustrating an example of a display screen according to the sixth modification;

FIG. 31 is a schematic diagram illustrating an example of a display screen according to the seventh modification;

FIG. 32 is a table for explaining an example of alert information according to the eighth modification;

FIG. 33 is a table for describing an example of alert information according to the ninth modification;

FIG. 34 is a schematic diagram illustrating an example of a display screen according to the eleventh modification;

FIG. 35 is a flowchart illustrating an example of processing of a remote operation support device according to the eleventh modification;

FIG. 36 is a schematic diagram illustrating an example of a display screen according to the twelfth modification; and

FIG. 37 is a flowchart illustrating an example of processing of a remote operation support device according to the twelfth modification.

## DETAILED DESCRIPTION

Hereinafter, a method of remote control, a terminal device, and a program according to an embodiment of the present disclosure will be described in detail with reference to the accompanying drawings.

## Embodiment

FIG. 1 is a diagram illustrating an example of a schematic configuration of a remote operation system 1 according to the present embodiment. As illustrated in FIG. 1, a remote operation system 1 includes a vehicle 101, a crane 102, a remote operation support device 20, a plurality of (two in the example of FIG. 1) terminal devices 301, and a terminal device 302.

Although one vehicle 101 is illustrated in FIG. **1,** the present invention is not limited thereto, and the number of vehicles 101 included in the remote operation system 1 can be arbitrarily changed according to design conditions and the like. Although FIG. 1 illustrates one crane 102, the number of cranes 102 included in the remote operation system 1 is not limited thereto, and can be arbitrarily changed according to design conditions or the like.

Furthermore, in FIG. 1, two terminal devices 301 and 302 are illustrated, but the present invention is not limited thereto, and the number of terminal devices 30 included in the remote operation system 1 can be arbitrarily changed according to design conditions and the like. In the following description, the terminal device 301 and the terminal device 302 will be simply referred to as "terminal device 30" in a case where they are not distinguished from each other. The same reference numerals are assigned to the same elements constituting the terminal device 30. In the present embodiment, the target to be remotely operated by the terminal device 301 is the vehicle 101, and the target to be remotely operated by the terminal device 302 is the crane 102.

In the example of FIG. 1, the vehicle 101, the crane 102, the remote operation support device 20, and the terminal device 30 can be connected to each other via a network 40 such as the Internet.

The vehicle 101 is an autonomously traveling vehicle, and is used for providing various services. The vehicle 101 is an example of an autonomous driving vehicle. The crane 102 is a mechanical device that lifts a container loaded on the vehicle 101 with a crane hook and transports the container to a predetermined position. In the present embodiment, the crane 102 is a gantry crane having a gate shape. Note that the crane 102 is not limited to a gantry crane. The crane hook is also referred to as a moving object.

The remote operation support device 20 is a device that supports remote operation of the vehicle 101 and the crane 102. The terminal device 301 is a device operated by an operator who performs a remote operation of the vehicle 101 in a remote control room. The terminal device 301 is a device operated by an operator who performs a remote operation of the crane 102 in the remote control room.

FIGS. 2 and 3 are activity diagrams illustrating an example of an overall operation flow of the remote operation system 1 according to the present embodiment. With reference to FIGS. 2 and 3, operation of cargo packing in a harbor will be described. FIGS. 2 and 3 illustrate the vehicle 101, the crane 102, the terminal device 301, the terminal device 302, a remote operator 303 of the vehicle 101, and a remote operator 304 of the crane 102.

In step S101, the vehicle 101 enters the loading area of the harbor. In step S102, the vehicle 101 arrives at the loading area. In step S103, the terminal device 301 receives an arrival notification indicating that the vehicle 101 has arrived at the loading area. In step S104, the remote operator 303 of the vehicle 101 checks the arrival notification received by the terminal device 301. In step S105, the remote operator 303 of the vehicle 101 checks the camera image captured by the camera of the vehicle 101. In step S106, the terminal device 301 receives the camera image captured by the camera of the vehicle 101.

In step S107, the remote operator 303 of the vehicle 101 checks whether the position of the crane hook of the crane 102 is sufficiently high from the camera image received by the terminal device 301. In step S108, in a case where the position of the crane hook of the crane 102 is not sufficiently high (step S108: No), the remote operator 303 of the vehicle 101 returns the process to step S107 and confirms again whether the position of the hook of the crane 102 is sufficiently high. On the other hand, in a case where the position of the crane hook of the crane 102 is sufficiently high (step S108: Yes), the remote operator 303 of the vehicle 101 advances the process to step S109.

In step S109, the remote operator 303 of the vehicle 101 presses the travel start button displayed on the terminal device 301. In step S110, the terminal device 301 instructs the vehicle 101 to start traveling. In step S111, the vehicle 101 enters a place under the crane 102. In step S112, the vehicle 101 arrives under the crane 102.

In step S113, the remote operator 303 of the crane 102 starts the remote operation of the crane 102. In step S114, the terminal device 302 transmits an operation signal to the crane 102. In step S115, the crane 102 loads the container onto the vehicle 101 based on the operation signal transmitted by the terminal device 302. In step S116, the crane 102 pulls up the crane hook of the crane 102.

In step S117, the remote operator 303 of the vehicle 101 checks the camera image captured by the camera of the vehicle 101. In step S118, the terminal device 301 receives the camera image captured by the camera of the vehicle 101.

In step S119, the remote operator 303 of the vehicle 101 checks whether the position of the crane hook of the crane 102 is sufficiently high from the camera image received by the terminal device 301. In step S120, in a case where the position of the crane hook of the crane 102 is not sufficiently high (step S120: No), the remote operator 303 of the vehicle 101 returns the process to step S119 and confirms again whether the position of the hook of the crane 102 is sufficiently high. On the other hand, in a case where the position of the crane hook of the crane 102 is sufficiently high (step S120: Yes), the remote operator 303 of the vehicle 101 advances the process to step S121.

In step S121, the remote operator 303 of the vehicle 101 presses the travel start button displayed on the terminal device 301. In step S122, the terminal device 301 instructs the vehicle 101 to start traveling. In step S123, the vehicle 101 starts traveling toward the destination. The remote operation system 1 of the present embodiment is applied to the above-described operation of cargo packing in a harbor.

FIG. 4 is a diagram illustrating an example of a configuration of each of the vehicle 101, the crane 102, the remote operation support device 20, and the terminal device 30 included in the remote operation system 1 according to the embodiment. Hereinafter, configurations of the vehicle 101, the crane 102, the remote operation support device 20, and the terminal device 30 will be described with reference to FIG. 2.

First, a configuration of the vehicle 101 will be described. As illustrated in FIG. 4, the vehicle 101 includes a communication device 110, a camera 120, a drive device 130, and a control device 140 as hardware elements. Note that the hardware elements of the vehicle 101 are not limited to the configuration illustrated in FIG. 4, and may include other hardware elements.

The communication device 110 is a device that communicates with an external device (for example, the remote operation support device 20 and the like) via a network 40. The camera 120 is mounted on the vehicle 101 and is disposed so as to be able to image a sight in front of the vehicle 101. The drive device 130 is a device that drives the vehicle 101. The drive device 130 includes, for example, a wheel drive device that applies a rotational driving force to the wheels, a steering drive device that steers the wheels, and the like.

The control device 140 is a device that integrally controls the operation of the vehicle 101. FIG. 5 is a diagram illustrating an example of a hardware configuration of the control device 140 according to the embodiment. In the present embodiment, the control device 140 is configured by a computer device. Note that the hardware configuration of a control device 190 included in the crane 102 described later, a control device 230 included in the remote operation support device 20, and a control device 340 included in the terminal device 30 is also similar to that in FIG. 5.

As illustrated in FIG. 5, the control device 140 includes a processor 150, a read only memory (ROM) 151, a random access memory (RAM) 152, and a device interface (I/F) unit 153.

The processor 150 is, for example, a central processing unit (CPU). The processor 150 executes the program to integrally control the operation of the control device 140 and implement various functions of the control device 140. Various functions of the control device 140 will be described later.

The ROM 151 is a nonvolatile memory to store various types of information including programs and the like executed by the processor 150. The RAM 152 is a volatile memory having a work region of the processor 150. The device I/F unit 153 is an interface that connects to another device (Communication device 110, camera 120, drive device 130, and the like).

Returning to FIG. 4, functions of the control device 140 will be described. As illustrated in FIG. 4, the control device 140 includes a vehicle characteristic information transmission unit 141, a position information acquisition unit 142, an image acquisition unit 143, a travel control unit 144, and an operation information reception unit 145.

In the example of FIG. 4, only the functions necessary for describing the main part of the present embodiment are illustrated, but the functions of the control device 140 are not limited thereto. In the present embodiment, the processor 150 executes a program stored in the ROM 151 to implement the functions of the above-described units. However, the present invention is not limited thereto, and some or all of these functions may be realized by a dedicated hardware circuit (semiconductor integrated circuit or the like).

The vehicle characteristic information transmission unit 141 transmits vehicle characteristic information about the vehicle characteristic of the host vehicle to the remote operation support device 20. Here, vehicle characteristics will be described. The vehicle characteristics include, for example, a vehicle ID, a vehicle height of the vehicle 101, a type of the vehicle 101, and the like. The vehicle ID indicates information for identifying the vehicle 101.

In the present embodiment, before the service operation, the vehicle characteristic information transmission unit 141 transmits the vehicle characteristic information about the vehicle 101. The timing of transmitting the vehicle characteristic information is not limited to the timing before the service operation, and can be arbitrarily set.

The vehicle characteristic information is included in the remote operation parameter information related to the remote operation parameter of the vehicle 101.

The position information acquisition unit 142 acquires position information indicating the location of the vehicle 101. As a method of acquiring the position information, various known techniques can be used. For example, the position information acquisition unit 142 can receive a global positioning system (GPS) signal indicating a radio wave transmitted from each of a plurality of GPS satellites, calculate the position of the vehicle 101 by three-dimensional positioning based on the received GPS signal, and acquire position information indicating the position.

The image acquisition unit 143 acquires an image captured by the camera 120. While the vehicle 101 is traveling after the start of the service operation, the image acquired by the image acquisition unit 143 is transmitted to the remote operation support device 20.

In the case of the autonomous traveling mode indicating the state in which the vehicle 101 autonomously travels, the travel control unit 144 performs control (control of driving the drive device 130) to cause the vehicle 101 to travel such that the vehicle 101 approaches the target position based on the target position and the position information acquired by the position information acquisition unit 142.

On the other hand, in the remote operation mode indicating a state in which the vehicle 101 is remotely operated by the operator, the travel control unit 144 performs control to cause the vehicle 101 to travel according to operation information indicating information input to the terminal device 30 according to the operation by the operator. In the present embodiment, as the traveling mode of the vehicle 101, there are the autonomous traveling mode described above and the remote operation mode described above, and the vehicle 101 basically travels in the autonomous traveling mode, and travels in the remote operation mode when it is in a state where it is impossible to autonomously travel.

The operation information reception unit 145 receives the operation information transmitted from the terminal device 301 via the remote operation support device 20. The travel control unit 144 performs control to cause the vehicle 101 to travel according to the operation information received by the operation information reception unit 145, and does not perform travel control based on the target position and the position information. That is, the traveling mode of the vehicle 101 is switched from the autonomous traveling mode to the remote operation mode.

Next, a configuration of the crane 102 will be described. As illustrated in FIG. 2, the crane 102 includes, as hardware elements, a communication device 160, a camera 170, a drive device 180, and a control device 190. Note that the hardware elements of the crane 102 are not limited to the configuration illustrated in FIG. 4, and may include other hardware elements.

The communication device 160 is a device that communicates with an external device (for example, the remote operation support device 20 and the like) via the network 40. The camera 170 is mounted on the crane 102, is disposed so as to be able to image the lower side of the crane 102, and images, for example, a crane hook of the crane 102. The drive device 180 is a device that drives the crane 102. The drive device 180 includes, for example, a drive device that moves the position of the crane hook of the crane 102 in the horizontal direction or the vertical direction, a drive device that moves the crane boom of the crane 102 according to the position of the container, and the like.

The control device 190 is a device that integrally controls the operation of the crane 102. As illustrated in FIG. 4, the control device 190 includes a crane characteristic information transmission unit 191, an image acquisition unit 192, a crane control unit 193, and an operation information reception unit 194. In the example of FIG. 4, only the functions necessary for describing the main part of the present embodiment are illustrated, but the functions of the control device 190 are not limited thereto. In the present embodiment, the processor 150 executes a program stored in the ROM 151 to implement the functions of the above-described units. However, the present invention is not limited thereto, and some or all of these functions may be realized by a dedicated hardware circuit (semiconductor integrated circuit or the like).

The crane characteristic information transmission unit 191 transmits vehicle characteristic information about the crane characteristic of the own crane to the remote operation support device 20. Here, crane characteristics will be described. The crane characteristics include, for example, a crane ID, a type of the crane 102, and the like. The crane ID indicates information for identifying the crane 102.

In the present embodiment, the crane characteristic information transmission unit 191 transmits crane characteristic information about the crane 102 before service operation. The timing of transmitting the crane characteristic information is not limited to the timing before the service operation, and can be arbitrarily set. The crane characteristic information is included in the remote operation parameter information related to the remote operation parameter of the crane 102.

The image acquisition unit 192 acquires an image captured by the camera 170. During the operation of the crane 102 after the start of the service operation, the image acquired by the image acquisition unit 192 is transmitted to the remote operation support device 20.

The crane control unit 193 performs control to operate the crane 102 according to operation information indicating information input to the terminal device 302 according to the operation by the operator in a remote operation mode indicating a state in which the crane 102 is remotely operated by the operator. The control for operating the crane 102 is, for example, control for operating the position of the crane hook or the crane boom of the crane 102.

The operation information reception unit 194 receives the operation information transmitted from the terminal device 302 via the remote operation support device 20.

Next, a configuration of the terminal device 301 will be described. As illustrated in FIG. 4, the terminal device 301 includes a communication device 310, a display device 320, an operation device 330, and a control device 340 as hardware elements. Note that the hardware elements of the terminal device 301 are not limited to the configuration illustrated in FIG. 2, and may be in a form including other hardware elements.

The communication device 310 is a device that communicates with an external device (for example, the remote operation support device 20 and the like) via the network 40. The display device 320 is a device that displays various types of information, and includes, for example, a liquid crystal display or the like. The operation device 330 is a device in which an operator performs various operations.

The control device 340 is a device that integrally controls the operation of the terminal device 301. In the present embodiment, the control device 340 is configured by a computer device, and has a hardware configuration similar to that of FIG. 5. Next, functions of the control device 340 will be described. As illustrated in FIG. 4, the control device 340 includes an information reception unit 341, a display control unit 342, an operation information transmission unit 343, and a time information transmission unit 344. In the example of FIG. 4, only the functions necessary for describing the main part of the present embodiment are illustrated, but the functions of the control device 340 are not limited thereto.

In the present embodiment, the processor 150 executes a program stored in the ROM 151 to implement the functions of the above-described units. However, the present invention is not limited thereto, and some or all of these functions may be realized by a dedicated hardware circuit.

The information reception unit 341 receives various types of information transmitted from the remote operation support device 20. For example, the information reception unit 341 can receive information such as a remote operation request to be described later, support information to be described later, and a camera image captured by the camera 120 of the vehicle 101 from the remote operation support device 20. Hereinafter, the camera image captured by the camera 120 of the vehicle 101 is also simply referred to as an image.

The display control unit 342 performs control to display various types of information about the display device 320. For example, the display control unit 342 can perform control to display prediction region information to be described later on the display device 320, can perform control to display alert information to be described later on the display device 320, and can perform control to display a camera image captured by the camera 120 of the vehicle 101 on the display device 320.

For example, in the case of the remote operation mode, a camera image captured by the camera 120 of the vehicle 101 is transmitted to the terminal device 301 via the remote operation support device 20, and the display control unit 342 displays the camera image received from the remote operation support device 20 on the display device 320, whereby the operator can perform the remote operation of the vehicle 101 while checking the traveling status of the vehicle 101.

The operation information transmission unit 343 transmits operation information input in response to the operation of the operation device 330 by the operator to the remote operation support device 20. For example, the operator can start a remote operation of the vehicle 101 by operating the operation device 330, and the operation information transmission unit 343 can transmit operation information input according to the operation of the operation device 330 by the operator to the remote operation support device 20.

The time information transmission unit 344 transmits, to the remote operation support device 20, time information indicating the time at which the camera image captured by the camera 120 of the vehicle 101 received from the remote operation support device 20 is displayed on the display device 320. The time information includes a terminal device ID for identifying the terminal device 301.

Next, a configuration of the terminal device 302 will be described. As illustrated in FIG. 4, the terminal device 302 includes a communication device 350, a display device 360, an operation device 370, and a control device 380 as hardware elements. Note that the hardware elements of the terminal device 302 are not limited to the configuration illustrated in FIG. 4, and may be in a form including other hardware elements.

The communication device 350 is a device that communicates with an external device (for example, the remote operation support device 20 and the like) via the network 40. The display device 360 is a device that displays various types of information, and includes, for example, a liquid crystal display or the like. The operation device 370 is a device in which an operator performs various operations.

The control device 380 is a device that integrally controls the operation of the terminal device 302. In the present embodiment, the control device 380 is configured by a computer device, and has a hardware configuration similar to that of FIG. 5. Next, functions of the control device 380 will be described. As illustrated in FIG. 4, the control device 380 includes an information reception unit 381, a display control unit 382, an operation information transmission unit 383, and a time information transmission unit 384. In the example of FIG. 4, only the functions necessary for describing the main part of the present embodiment are illustrated, but the functions of the control device 380 are not limited thereto.

In the present embodiment, the processor 150 executes a program stored in the ROM 151 to implement the functions of the above-described units. However, the present invention is not limited thereto, and some or all of these functions may be realized by a dedicated hardware circuit.

The information reception unit 381 receives various types of information transmitted from the remote operation support device 20. For example, the information reception unit 381 can receive information such as a camera image captured by the camera 170 of the crane 102 from the remote operation support device 20. Hereinafter, the camera image captured by the camera 170 of the crane 102 is also simply referred to as an image.

The display control unit 382 performs control to display various types of information about the display device 360. For example, the display control unit 382 can perform control to display prediction region information to be described later on the display device 360, can perform control to display alert information to be described later on the display device 360, and can perform control to display a camera image captured by the camera 170 of the crane 102 on the display device 360.

For example, in the remote operation mode, the camera image captured by the camera 170 of the crane 102 is transmitted to the terminal device 302 via the remote operation support device 20, and the display control unit 382 displays the camera image received from the remote operation support device 20 on the display device 360, so that the operator can perform the remote operation of the crane 102 while confirming the position status of the crane hook of the crane 102.

The operation information transmission unit 383 transmits operation information input in response to the operation of the operation device 370 by the operator to the remote operation support device 20. For example, the operator operates the operation device 370 to remotely operate the crane 102 while checking the camera image captured by the camera 170 of the crane 102 displayed on the display device 360, and the operation information transmission unit 383 can transmit operation information input according to the operation of the operation device 370 by the operator to the remote operation support device 20.

The time information transmission unit 384 transmits, to the remote operation support device 20, time information indicating the time at which the camera image captured by the camera 170 of the crane 102 received from the remote operation support device 20 is displayed on the display device 360. The time information includes a terminal device ID for identifying the terminal device 302.

Next, a configuration of the remote operation support device 20 will be described. The remote operation support device 20 includes a communication device 210, a storage unit 220, and a control device 230 as hardware elements. Note that the hardware elements of the remote operation support device 20 are not limited to the configuration illustrated in FIG. 4, and may include other hardware elements.

The communication device 210 is a device that communicates with an external device (for example, the vehicle 101, the crane 102, the terminal device 30, and the like) via the network 40. The storage unit 220 stores the vehicle characteristic information in association with each vehicle 101. The storage unit 220 stores the vehicle characteristic information in association with each crane 102.

The control device 230 is a device that integrally controls the operation of the remote operation support device 20. In the present embodiment, the control device 230 is configured by a computer device, and has a hardware configuration similar to that of FIG. 5.

Next, functions of the control device 230 of the remote operation support device 20 will be described. As illustrated in FIG. 4, the control device 230 includes a reception unit 231, a delay information calculation unit 232, a crane hook position calculation unit 233, a prediction region information calculation unit 234, a determination unit 235, an alert information generation unit 236, a support control unit 237, an output unit 238, and a remote information transmission/reception unit 239. In the example of FIG. 4, only the functions necessary for describing the main part of the present embodiment are illustrated, but the functions of the control device 230 are not limited thereto.

In the present embodiment, the processor 150 executes a program stored in the ROM 151 to implement the functions of the above-described units. However, the present invention is not limited thereto, and some or all of these functions may be realized by a dedicated hardware circuit.

As described above, the reception unit 231 receives the vehicle characteristic information transmitted from the vehicle 101. Then, the reception unit 231 stores the vehicle ID received from the vehicle 101 and the vehicle characteristic information in the storage unit 220 in association with each other. As described above, the reception unit 231 receives the crane characteristic information transmitted by the crane 102. Then, the reception unit 231 stores the crane ID received from the crane 102 and the vehicle characteristic information in the storage unit 220 in association with each other.

Furthermore, as described above, the reception unit 231 receives the camera image captured by the camera 120 transmitted by the vehicle 101. Then, the reception unit 231 stores the vehicle ID received from the vehicle 101 and the camera image in the storage unit 220 in association with each other. As described above, the reception unit 231 receives the camera image captured by the camera 170 transmitted by the crane 102. Then, the reception unit 231 stores the crane ID received from the crane 102 and the camera image in the storage unit 220 in association with each other.

Furthermore, as described above, the reception unit 231 receives the time information transmitted by the terminal device 301 and the terminal device 302. Then, the reception unit 231 stores the terminal device ID received from the terminal device 301 and the terminal device 302 and the time information in the storage unit 220 in association with each other.

In the present embodiment, the reception unit 231 has a function of receiving the vehicle characteristic information, a function of storing the vehicle characteristic information in the storage unit 220, a function of receiving the crane characteristic information, a function of storing the crane characteristic information in the storage unit 220, a function of receiving the camera image, a function of storing the camera image in a storage unit 202, a function of receiving the time information, and a function of storing the time information in the storage unit 202. However, the present invention is not limited to this. For example, the function of receiving the vehicle characteristic information, the function of storing the vehicle characteristic information in the storage unit 220, the function of receiving the crane characteristic information, the function of storing the crane characteristic information in the storage unit 220, the function of receiving the image, the function of storing the image in the storage unit 202, the function of receiving the time information, and the function of storing the time information in the storage unit 202 may be individually provided.

The delay information calculation unit 232 calculates delay information indicating a time from when an image is captured to when the image is drawn. Specifically, the delay information calculation unit 232 calculates delay information indicating a delay time required until the display device 320 of the terminal device 301 draws an image with the time captured by the camera 120 of the vehicle 101 as a base point. The delay information calculation unit 232 calculates the delay information by taking a difference between the time included in the image information from the time included in the time information. Here, the delay information will be described with reference to FIG. **6.** FIG. 6 is a table for describing delay information according to the embodiment.

The table T1 illustrated in FIG. 6 indicates a video frame ID indicating an identifier of a camera image, a video acquisition time indicating a time at which the camera image is acquired, and a video drawing time indicating a time at which the camera image is drawn on the display device 320 of the terminal device 301. The delay information calculation unit 232 acquires the video acquisition time and the video drawing time for each video frame ID, and calculates the delay information by taking a difference between the video drawing time and the video acquisition time. For example, the delay information illustrated in FIG. 6 is (video drawing time (=yyyy-mm-ddThh: mm: 21Z))- (video acquisition time (=yyyy-mm-ddThh: mm: 01Z)) =20 seconds.

Note that, in the above description, the delay information calculation unit 232 calculates the delay information by using the time when the camera image of the camera 120 of the vehicle 101 is acquired and the time when the display device 320 of the terminal device 301 draws an image, but the delay information calculation unit 232 may calculate the delay information by using the time when the camera image of the camera 170 of the crane 102 is acquired and the time when the display device 360 of the terminal device 302 draws an image.

Returning to FIG. 4, the crane hook position calculation unit 233 calculates crane hook position information indicating the position of the crane hook using the camera image captured by the camera 120 of the vehicle 101. Here, a method of calculating the crane hook position information will be described with reference to FIGS. 7 and 8.

FIG. 7 is a schematic diagram for describing the position of the crane hook according to the embodiment. FIG. 7 illustrates a region 51 of the crane hook, a center position 52 of the crane hook, the vehicle 101, the crane 102, the camera 120, an optical axis center C1 indicating the center of the optical axis of the camera 120, a distance R (m) indicating a distance to the center position 52 of the crane hook with the position of the camera 120 as a base point, and an azimuth angle θ (deg) from the position of the optical axis center C1 on the camera image as an origin to the center position 52 of the crane hook with respect to the optical axis center C1.

FIG. 8 is a schematic diagram illustrating an example of a camera image according to the embodiment. A camera image 61 illustrated in FIG. 8 illustrates the crane hook region 51, the center position 52 of the crane hook, the azimuth angle θ, and the azimuth angle Φ (deg) from the position of the optical axis center C1 on the camera image as the origin to the center position 52 of the crane hook with respect to the optical axis center C1.

In FIG. 7 and the drawings described below, an X axis, a Y axis, and a Z axis orthogonal to each other respectively mean a traveling direction of the vehicle 101, a horizontal direction of a crane boom of the crane 102, and a vertical direction of a crane hook of the crane 102. In addition, in the following description, in a case of simply described as the X direction, the Y direction, or the Z direction, it means each axial direction and includes two opposite directions.

In addition, in a case where the positive direction of the X axis is identified, it is a traveling direction in which the vehicle 101 travels toward the crane 102, in a case where the positive direction of the Y axis is identified, it is one direction in which the crane boom of the crane 102 moves toward the vehicle 101, and in a case where the positive direction of the Z axis is identified, it is one direction in which the crane hook of the crane 102 moves from the lower side to the upper side.

Further, in a case where the negative direction of the X axis is identified, it is a backward direction in which the vehicle 101 moves backward toward the crane 102, in a case where the negative direction of the Y axis is identified, it is one direction in which the crane boom of the crane 102 moves away from the vehicle 101, and in a case where the negative direction of the Z axis is identified, it is one direction in which the crane hook of the crane 102 moves from the upper side to the lower side.

First, the crane hook position calculation unit 233 identifies the crane hook region 51 of the crane 102 from the camera image captured by the camera 120 transmitted by the vehicle 101 and received by the reception unit 231. Here, the region 51 of the crane hook refers to a region of the crane hook and the container lifted by the crane hook. The crane hook position calculation unit 233 identifies the region 51 of the crane hook of the crane 102 from the camera image 61 using a known image recognition method (see FIG. 8).

In addition, the crane hook position calculation unit 233 sets the center of the identified region of the crane hook at the center position 52 of the crane hook. Further, the crane hook position calculation unit 233 calculates the relative orientation (θ, Φ) of the crane hook with respect to the optical axis center C1 from the position when the position on the image of the optical axis center C1 is set as the origin. Then, the crane hook position calculation unit 233 calculates the distance R from the camera 120 of the vehicle 101 to the center position 52 of the crane hook from the relative orientation (θ, Φ) of the crane hook and the width W of the region 51 of the crane hook on the camera image 61 using the crane hook distance calculation information stored in the storage unit 220.

Here, the crane hook distance calculation information will be described with reference to FIG. 9. FIG. 9 is a table illustrating an example of crane hook distance calculation information according to the embodiment. The table T2 illustrated in FIG. 9 is a table in which the relative orientation (θ, Φ), the width W of the crane hook region 51 on the camera image 61, and the distance R are associated with each other. As a result, the crane hook position calculation unit 233 calculates the distance to the camera 120 of the vehicle 101 from the size of the crane hook region 51.

Returning to FIG. 7, the crane hook position calculation unit 233 calculates the center position 52 (X, Y, Z) [unit: m] of the crane hook in three dimensions from the elevation angle, the azimuth angle, and the distance when the crane hook is viewed from the camera 120 of the vehicle 101 by the following equation.

$$X = x + R\cos(\theta+\omega)\ \cos(\Phi+\psi)$$

$$Y = y + R\cos(\theta+\omega)\ \sin(\Phi+\psi)$$

$$Z = z + R\sin(\theta+\omega)$$

Here, the position of the camera 120 of the vehicle 101 in three dimensions is (x, y, z) [unit: m]. Furthermore, in the above-described orthogonal coordinate system, the azimuth angle of the camera 120 of the vehicle 101 is defined as ψ [deg], and the elevation angle of the camera 120 of the vehicle 101 is defined as ω [deg]. The azimuth angle ψ is set such that the rotation in the Y-axis direction is positive at 0 degrees on the X-axis. The elevation angle ω [deg] is set such that the rotation in the Z-axis direction is positive at 0 degrees on the X-axis. Furthermore, a coordinate system including the distance R, the azimuth angle ψ, and the elevation angle ω is also referred to as a polar coordinate system centered on the camera 120 of the vehicle 101.

Note that the center position 52 of the crane hook may be calculated from a result of image processing such as extraction of a crane region by deep learning.

Returning to FIG. 4, the prediction region information calculation unit 234 calculates prediction region information indicating a region, in the image, where the hook is predicted to be likely to be present based on the delay information indicating the time from when an image is captured to when the image is drawn and the position of the crane hook to be remotely operated, which is caught in the image. Specifically, the prediction region information calculation unit 234 calculates prediction region information indicating a region, in the image, where the crane hook is predicted to be likely to be present based on the delay information calculated by the delay information calculation unit 232 and the position of the crane hook including the crane hook position information calculated by the crane hook position calculation unit 233.

For example, the prediction region information calculation unit 234 acquires the delay information calculated by the delay information calculation unit 232. Further, the prediction region information calculation unit 234 acquires the position (X, Y, Z) of the hook of the crane calculated by the crane hook position calculation unit 233. Further, the prediction region information calculation unit 234 applies a known Kalman filter to acquire each error ellipsoid in a plurality of reliability sections centered on the estimated position of the crane hook after the delay time included in the delay information. In a case where the control information of the crane hook such as the hoisting speed information indicating the hoisting speed of the crane hook can be acquired, the prediction region information calculation unit 234 may calculate a prediction value in which the crane hook exists from the control information and correct the estimated position of the crane hook using the calculated prediction value.

Then, the prediction region information calculation unit 234 uses the plurality of acquired error ellipsoids and the distance R calculated by the crane hook position calculation unit 233 to calculate an error ellipsoid in a polar coordinate system centered on the camera 120 of the vehicle 101 corresponding to the plurality of acquired error ellipsoids. The error ellipsoid in the polar coordinate system centered on the camera 120 of the vehicle 101 is an example of the prediction region information described above. Here, the prediction region information will be described with reference to FIG. 10.

FIG. 10 is a schematic diagram illustrating an example of prediction region information according to the embodiment. FIG. 10 is a schematic diagram in which a plurality of pieces of prediction region information is superimposed on the schematic diagram illustrated in FIG. 7. FIG. 10 illustrates the crane hook region 51, the vehicle 101, the crane 102, the camera 120, the optical axis center C1, the distance R [m], the prediction region information A1, and the prediction region information A2. Both the prediction region information A1 and the prediction region information A2 are error ellipsoids in a plurality of reliability sections centered on the estimated position of the crane hook after the delay time included in the delay information in the polar coordinate system centered on the camera 120 of the vehicle 101.

Here, the reliability section indicates, for example, a probability that the position of the crane hook is within the section. The size of the error ellipsoid varies depending on the probability. Regarding the relationship between the reliability section and the error ellipsoid, the larger the reliability section is, the larger the size of the ellipsoid is. That is, as the value of the probability in the reliability section increases, the rate at which the ellipsoid increases with respect to the rate of increase in the value of the probability in the reliability section increases. For example, the size of the error ellipsoid with the reliability section of 95% is twice the size of the error ellipsoid with the reliability section of 68%. For example, the size of the error ellipsoid with the reliability section of 99.5% is 1.5 times the size of the error ellipsoid with the reliability section of 95%.

Since the prediction region information A1 illustrated in FIG. 10 is set to have a lower probability than the prediction region information A2, the size of the prediction region information A1 is smaller than the size of the prediction region information A2. That is, the prediction region information A2 indicates a region where the probability that the crane hook exists is high, compared with the region indicated by the prediction region information A1. The prediction region information A1 is an example of the first prediction region information. The prediction region information A2 is an example of the second prediction region information.

Returning to FIG. 4, the prediction region information calculation unit 234 calculates an error ellipsoid on the camera image using the calculated error ellipsoid in the polar coordinate system centered on the camera 120 of the vehicle 101. The error ellipsoid on the camera image is an example of the prediction region information described above. Here, the prediction region information will be described with reference to FIG. 11.

FIG. 11 is a schematic diagram illustrating an example of prediction region information according to the embodiment. FIG. 11 is a schematic diagram in which a plurality of pieces of prediction region information is superimposed on the schematic diagram illustrated in FIG. 8. A camera image 61 illustrated in FIG. 11 indicates prediction region information A3 and prediction region information A4. The prediction region information A3 corresponds to the prediction region information A1 illustrated in FIG. 10. The prediction region information A4 corresponds to the prediction region information A2 illustrated in FIG. 10. In addition, since the prediction region information A3 and the prediction region information A4 superimposed on the camera image 61 reflect the time from when an image is captured to when the image is drawn, and are delayed from the actual crane hook position, it can be seen that the ellipsoid center and the crane hook position are shifted.

Returning to FIG. 4, the determination unit 235 determines whether there is a possibility of collision between the region indicated by the prediction region information and a surrounding object. Specifically, the determination unit 235 determines whether there is a possibility of collision between the region indicated by the prediction region information calculated by the prediction region information calculation unit 234 and a surrounding object. Here, the possibility of collision will be described with reference to FIG. 12.

FIG. 12 is a schematic diagram illustrating a positional relationship between a region of prediction region information and a surrounding object according to the embodiment. FIG. 12 corresponds to the schematic diagram illustrated in FIG. 10, and FIG. 12 illustrates the crane hook region 51, the vehicle 101, the crane 102, the camera 120, the prediction region information A1, the prediction region information A2, the distance H1 between the lowest point of the region of the prediction region information A1 and the ground, the distance H2 between the lowest point of the region of the prediction region information A2 and the ground, and the vehicle height H3 of the vehicle 101. The distance H1 is larger than the distance H2. In FIG. 12, the surrounding object will be described as a vehicle 101, but the surrounding object is not limited thereto.

For example, the determination unit 235 determines the possibility of collision between the region indicated by the prediction region information and the vehicle 101 using the distance of the region indicated by the prediction region information from the ground and the vehicle height of the vehicle 101. Specifically, the determination unit 235 acquires the prediction region information A1 and the prediction region information A2 calculated by the prediction region information calculation unit 234. In addition, the determination unit 235 calculates the distance between the lowest point of each piece of the acquired prediction region information and the ground. Furthermore, the determination unit 235 acquires vehicle height information about the vehicle height of the vehicle 101 stored in the storage unit 220. FIG. 13 is a table illustrating an example of vehicle height information according to the embodiment. The table T3 illustrated in FIG. 13 indicates a table in which a vehicle ID and a vehicle height are associated with each other.

Returning to FIG. 12, the determination unit 235 determines whether there is a possibility of collision between the region indicated by the prediction region information and the vehicle 101 by using the distance of the region indicated by the prediction region information from the ground and the vehicle height of the vehicle 101. Specifically, in a case where the distance H1 is smaller than the vehicle height H3, the determination unit 235 determines that there is a possibility of collision between the region indicated by the prediction region information A1 and the vehicle 101. In a case where the distance H1 is larger than the vehicle height H3, the determination unit 235 determines that there is no possibility of collision between the region indicated by the prediction region information A1 and the vehicle 101.

Further, in a case where the distance H2 is smaller than the vehicle height H3, the determination unit 235 determines that there is a possibility of collision between the region indicated by the prediction region information A2 and the vehicle 101. In a case where the distance H2 is larger than the vehicle height H3, the determination unit 235 determines that there is no possibility of collision between the region indicated by the prediction region information A2 and the vehicle 101.

Returning to FIG. 4, when the determination unit 235 determines that there is a possibility of collision between the region indicated by the prediction region information and the surrounding object, the alert information generation unit 236 generates alert information indicating that there is a possibility of collision. For example, in a case where the distance H1 illustrated in FIG. 12 is smaller than the vehicle height H3, the alert information includes a warning sentence "(warning) collision possibility is large". In a case where the distance H2 illustrated in FIG. 12 is smaller than the vehicle height H3, the alert information includes a warning sentence "there is a possibility of collision". The alert information differs depending on each prediction region information because the prediction region information A1 is set to have a higher probability than the prediction region information A2.

The support control unit 237 performs control according to a positional relationship between the region indicated by the prediction region information and a surrounding object indicating an object around the crane hook. Specifically, in a case where there is a possibility of collision between the region indicated by the prediction region information and a surrounding object, the support control unit 237 restricts the remote operation. For example, in a case where the surrounding object is the vehicle 101, the support control unit 237 performs control to prohibit the vehicle 101 from entering a place under the crane hook as control to restrict the remote operation.

In addition, the support control unit 237 performs control so that control in accordance with the positional relationship between the region indicated by the first prediction region information and the surrounding object is different from control in accordance with the positional relationship between the region indicated by the second prediction region information and the surrounding object. Specifically, in a case where there is a possibility of collision between the region indicated by the prediction region information A1 illustrated in FIG. 12 and the vehicle 101, the support control unit 237 restricts the remote operation. Further, the support control unit 237 outputs a warning in a case where there is a possibility of collision between the region indicated by the prediction region information A2 illustrated in FIG. 12 and the vehicle 101.

The output unit 238 outputs the prediction region information calculated by the prediction region information calculation unit 234 to the terminal device 301. In addition, the output unit 238 outputs the alert information generated by the alert information generation unit 236 to the terminal device 301. Furthermore, the output unit 238 outputs, to the terminal device 301, control information corresponding to control by the support control unit 237 according to a positional relationship between the region indicated by the prediction region information and a surrounding object indicating an object around the crane hook.

Here, various types of information output by the output unit 238 will be described with reference to FIGS. 14, 15, and 16. FIGS. 14, 15, and 16 are schematic diagrams illustrating an example of a display screen according to the embodiment. The prediction information in FIGS. 14, 15, and 16 corresponds to the prediction information illustrated in FIG. 11. The display screens in FIGS. 14, 15, and 16 are schematic diagrams when viewed in the positive direction of the X axis, which is the traveling direction of the vehicle 101.

A display screen 321 illustrated in FIG. 14 illustrates prediction region information A3, prediction region information A4, a message M1 indicating "51" of the vehicle ID of the vehicle 101, a message M2 indicating the current state of the vehicle 101, and a message M3 indicating whether the vehicle 101 is allowed to enter a place under the crane hook. In the display screen 321, there is no possibility of collision between the region indicated by the prediction region information and the vehicle 101, and there is no alert information.

Therefore, the message M2 is an example including "standby" which is an example of a sentence indicating a state of standby to enter a place under the crane hook of the vehicle 101. In addition, the message M3 is an example including "entry permission" which is an example of a sentence indicating a state in which the vehicle 101 can enter a place under the crane hook. Here, the operator can remotely operate the vehicle 101 by pressing the message M3 of "entry permission".

A display screen 322 illustrated in FIG. 15 indicates a message M4 in which the message M3 is updated with respect to the display screen 321 illustrated in FIG. 14. In the display screen 322, there is a possibility of collision between the region indicated by the prediction region information A4 and the vehicle 101, and alert information exists. Therefore, the message M4 is an example including "there is a possibility of collision" and" temporary stop" which are examples of sentences of warning indicating a state in which the vehicle 101 is not allowed to enter a place under the crane hook. Here, the message M4 indicates a state in which the remote operation is restricted by the support control unit 237.

A display screen 323 illustrated in FIG. 16 illustrates a message M5 in which the message M3 is updated with respect to the display screen 321 illustrated in FIG. 14. In the display screen 323, there is a possibility of collision between the region indicated by the prediction region information A3 and the vehicle 101, and alert information exists. Therefore, the message M5 is an example including "(Warning) collide with high possibility" which is an example of a sentence of warning indicating a state in which the vehicle 101 is not allowed to enter a place under the crane hook. Here, the message M5 indicates a state in which the "entry permission" of the message M3 illustrated in FIG. 14 is deactivated and the remote operation by the operator is not accepted, and the message M5 indicates a state in which the remote operation is restricted by the support control unit 237.

Returning to FIG. 4, the remote information transmission/reception unit 239 transmits and receives remote information indicating information used for the remote operation of the vehicle 101. The remote information includes, for example, operation information transmitted from the terminal device 301 and information such as an image captured by the camera 120 of the vehicle 101.

For example, the remote information transmission/reception unit 239 can receive the operation information transmitted from the terminal device 301 to transmit the received operation information to the vehicle 101. Furthermore, as described above, while the vehicle 101 is traveling after the start of the service operation, the image captured by the camera 120 of the vehicle 101 is transmitted to the remote operation support device 20, so that the remote information transmission/reception unit 239 can also transmit the image received from the vehicle 101 to the terminal device 301.

The remote information transmission/reception unit 239 transmits and receives remote information indicating information used for remote operation of the crane 102. The remote information includes, for example, operation information transmitted from the terminal device 302 and information such as an image captured by the camera 170 of the crane 102.

For example, the remote information transmission/reception unit 239 can receive the operation information transmitted from the terminal device 302 to transmit the received operation information to the crane 102. Further, as described above, during the operation of the crane 102 after the start of the service operation, the image captured by the camera 170 of the crane 102 is transmitted to the remote operation support device 20, so that the remote information transmission/reception unit 239 can also transmit the image received from the crane 102 to the terminal device 302.

Next, an example of an operation procedure of the remote operation support device 20 will be described with reference to FIG. 17. FIG. 17 is a flowchart illustrating an example of processing of the remote operation support device 20 according to the embodiment.

The reception unit 231 receives the camera image captured by the camera 120 transmitted from the vehicle 101 (step S21). The delay information calculation unit 232 calculates delay information indicating a delay time required until the display device 320 of the terminal device 301 draws an image with the time captured by the camera 120 of the vehicle 101 as a base point (step S22). The crane hook position calculation unit 233 calculates crane hook position information indicating the position of the crane hook using the camera image captured by the camera 120 of the vehicle 101 (step S23).

The prediction region information calculation unit 234 calculates prediction region information indicating a region, in the image, where the crane hook is predicted to be likely to be present based on the delay information calculated by the delay information calculation unit 232 and the position of the crane hook included in the crane hook position information calculated by the crane hook position calculation unit 233 (step S24). The output unit 238 outputs the prediction region information calculated by the prediction region information calculation unit 234 to the terminal device 301 (step S25).

The determination unit 235 determines whether there is a possibility of collision between a region indicated by the prediction region information calculated by the prediction region information calculation unit 234 and a surrounding object (step S26). Here, when the determination unit 235 determines that there is no possibility of collision between the region indicated by the prediction region information and the surrounding object (step S26: No), this process ends. On the other hand, when the determination unit 235 determines that there is a possibility of collision between the region indicated by the prediction region information and a surrounding object (step S26: Yes), the process proceeds to step S27.

In step S27, when the determination unit 235 determines that there is a possibility of collision between the region indicated by the prediction region information and the surrounding object, the alert information generation unit 236 generates alert information indicating that there is a possibility of collision (step S27). In a case where there is a possibility of collision between the region indicated by the prediction region information and a surrounding object, the support control unit 237 restricts the remote operation (step S28).

The output unit 238 outputs the alert information generated by the alert information generation unit 236 to the terminal device 301 (step S29). The output unit 238 outputs, to the terminal device 301, control information corresponding to control by the support control unit 237 according to a positional relationship between the region indicated by the prediction region information and a surrounding object indicating an object around the crane hook. When step S28 ends, this routine ends.

As described above, the remote operation support device 20 of the present embodiment outputs the prediction region information indicating the region, in the image, where the crane hook is predicted to be likely to be present based on the delay information indicating the time from when an image is captured to when the image is drawn and the position of the crane hook of the crane to be remotely operated, which is caught in the image. As a result, the remote operation support device 20 outputs the prediction region information, so that the operator can grasp the position of the crane hook in consideration of the time from when an image is captured to when the image is drawn on the terminal device 301.

In addition, the remote operation support device 20 performs control according to the positional relationship between the region indicated by the prediction region information and the surrounding object indicating the object around the crane hook, and restricts the remote operation in a case where there is a possibility of collision between the region indicated by the prediction region information and the surrounding object. As a result, the remote operation support device 20 provides control according to the distance between the crane hook and the surrounding object, so that the operator can perform control so that the crane hook and the surrounding object do not collide with each other. Therefore, according to the present embodiment, the operator can realize safe remote operation.

Although the embodiments of the present disclosure have been described above, the above-described embodiments have been presented as examples, and are not intended to limit the scope of the invention. These novel embodiments can be implemented in various other forms, and various omissions, substitutions, and changes can be made without departing from the gist of the invention. These novel embodiments and modifications thereof are included in the scope and gist of the invention, and are included in the invention described in the claims and the equivalent scope thereof.

Furthermore, the effects of the embodiments described in the present specification are merely examples and are not limited, and other effects may be provided. Hereinafter, modifications will be described.

First modification

The display screen in the above-described embodiment is a schematic diagram viewed in the positive direction of the X axis which is the traveling direction of the vehicle 101, but is not limited thereto, and may be a schematic diagram viewed in the Y axis direction, for example. FIG. 18 is a schematic diagram illustrating an example of a display screen according to the first modification. A display screen 324 illustrated in FIG. 18 illustrates the vehicle 101, the crane 102, the prediction region information A1, and the prediction region information A2. The prediction information illustrated in FIG. 18 corresponds to FIG. 12.

In addition, FIG. 18 includes a height (5 m in FIG. 18) indicating the vehicle height of the vehicle 101. Further, FIG. 18 includes "waiting for entry permission", which is an example of a sentence indicating a state of waiting for entry permission in order to enter a place under the crane hook of the vehicle 101, which indicates the current state of the vehicle 101.

Second modification

For example, the display screen may be a schematic diagram viewed in the negative direction of the X axis. FIG. 19 is a schematic diagram illustrating an example of a display screen according to the second modification. A display screen 325 illustrated in FIG. 19 illustrates the crane 102, the prediction region information A1, and the prediction region information A2. The prediction information illustrated in FIG. 19 corresponds to FIG. 12. In addition, FIG. 19 includes coordinate information (3 m, 5 m) indicating the position of the crane hook in two dimensions on the YZ axis when the position of the support structure L1 supporting the crane 102 from the ground is set as the origin.

Third modification

For example, the remote operation support device 20 may identify a surrounding object existing in the region indicated by the prediction region information based on the camera image captured by the camera 170 of the crane 102 and the position information of the vehicle 101. FIG. 20 is a diagram illustrating an example of a configuration of each of a plurality of devices included in the remote operation system 1 according to the third modification. The control device 230 of the remote operation support device 20 according to the third modification includes a surrounding object detection unit 240 and a surrounding object identification unit 241 in addition to the functions of the control device 230 illustrated in FIG. 4 described above.

The reception unit 231 sequentially acquires the position information indicating the position of the vehicle 101, and stores the position information in the storage unit 220. The surrounding object detection unit 240 detects, from the camera image captured by the camera 170 of the crane 102, object position/direction type information including the position, direction, and type of the object present in the region indicated by the prediction information. The object position/direction type information is indicated by ($x_v$, $y_v$, $\psi_v$, type). Here, $x_v$ and $y_v$ are represented by two-dimensional positions (m) on the ground, $\psi_v$ is represented by 0 degrees at the X axis and by azimuth angles (deg) with rotation in the Y axis direction being positive, and the type indicates the type of vehicle. Then, the surrounding object identification unit 241 compares the position information with the object position/direction type information based on the position information indicating the position of the vehicle 101 stored in the storage unit 220 and the object position/direction type information detected by the surrounding object detection unit 240, and identifies the surrounding object existing in the region indicated by the prediction region information.

FIG. 21 is a table illustrating an example of position information of the vehicle according to the third modification. The table T4 illustrated in FIG. 21 is a table in which a vehicle ID, a two-dimensional position (x, y) of the vehicle 101 on the ground, and an azimuth angle $\psi$ are associated with each other.

FIG. 22 is a schematic diagram for describing a surrounding object according to the third modification. FIG. 22 illustrates prediction region information A5, prediction region information A6, a vehicle 1011, and a vehicle 1012. For example, the object position/direction type information of the vehicle 1011 illustrated in FIG. 22 is (12.3, 34.5, 0.1, Truck), and the object position/direction type information of the vehicle 1011 is (10.2, 30.5, 30, Truck).

In the case of FIGS. 21 and 22, the surrounding object identification unit 241 compares the position information with the object position/direction type information based on the position information indicating the position of the vehicle 101 stored in the storage unit 220 illustrated in FIG. 21 and the object position/direction type information detected by the surrounding object detection unit 240 in FIG. 22, and identifies the vehicle 1011 as a surrounding object present in the region indicated by the prediction region information as "a vehicle whose vehicle ID is 10".

Then, the determination unit 235 determines whether there is a possibility of collision between the region indicated by the prediction region information and the surrounding object identified by the surrounding object identification unit 241. For example, in a case where a surrounding object exists in the region indicated by the prediction region information, the determination unit 235 determines that there is a possibility of collision between the region indicated by the prediction region information and the surrounding object.

In a case where the determination unit 235 determines that there is a possibility of collision between the region indicated by the prediction region information and a surrounding object, the support control unit 237 restricts the remote operation of the crane boom of the crane 102. For example, the support control unit 237 performs control for restricting the maximum speed of the boom, which is an arm portion to which the crane hook is attached and that can be turned, as control for restricting the remote operation. For example, the support control unit 237 performs control to prohibit a crane boom operation in a direction approaching the vehicle 101 as control to restrict the remote operation.

In addition, in a case where the determination unit 235 determines that there is a possibility of collision between the region indicated by the prediction region information and a surrounding object, the support control unit 237 performs call connection between the terminal device 301 and the terminal device 302. For example, in a case where the determination unit 235 determines that there is a possibility of collision between the region indicated by the prediction region information and the vehicle 101, the support control unit 237 identifies the terminal device 301 remotely operating the vehicle 101, and performs call connection between the identified terminal device 301 and the terminal device 302 remotely operating the crane 102.

FIGS. 23 and 24 are schematic diagrams illustrating an example of a display screen according to a third modification. A display screen 326 illustrated in FIG. 23 is a display screen displayed by the display device 320 of the terminal device 301. A display screen 327 illustrated in FIG. 24 is a display screen displayed by the display device 360 of the terminal device 302. It is assumed that the display screen 326 and the display screen 327 are displayed on the respective terminal devices at the same time.

In the display screen 326 illustrated in FIG. 23, a message M21 in which the message M2 is updated and an icon M6 with which a call can be made with the terminal device 302 that supports the remote operation of the currently operating crane 102 are illustrated with respect to the display screen 322 illustrated in FIG. 15. The message M21 is an example including "traveling" which is an example of a sentence indicating a state in which the vehicle 101 is entering a place under the crane hook.

The display screen 327 illustrated in FIG. 24 illustrates prediction region information A5, prediction region information A6, a message M11 indicating the crane ID of the crane 102, a message M12 indicating the current state of the crane 102, a message M13 indicating alert information for the crane 102, and an icon M6 with which a call can be made with the terminal device 301 that supports the remote operation of the vehicle 101 currently traveling.

The message 12 is an example including "operating" which is an example of a sentence indicating a state in which the crane 102 is currently in operation. The message M13 is an example including "there is a possibility of collision with the No. 51" which is an example of a sentence of a warning indicating a state in which the vehicle 101 is not allowed to enter a place under the crane hook.

FIG. 25 is a flowchart illustrating an example of processing of the remote operation support device 20 according to the third modification. Note that the flow of processing described below is an example, and it is also possible to change the processing order, delete some processing, and add other processing. Note that, in FIG. 25, description of processing similar to that in FIG. 17 will be omitted.

In step S31, the surrounding object identification unit 241 compares the position information with the object position/direction type information based on the position information indicating the position of the vehicle 101 stored in the storage unit 220 and the object position/direction type information detected by the surrounding object detection unit 240, and identifies the surrounding object existing in the region indicated by the prediction region information (step S31).

In step S32, the determination unit 235 determines whether there is a possibility of collision between the region indicated by the prediction region information and the surrounding object identified by the surrounding object identification unit 241 (step S32). Here, when the determination unit 235 determines that there is no possibility of collision between the region indicated by the prediction region information and the surrounding object identified by the surrounding object identification unit 241 (step S32: No), this process ends. On the other hand, when the determination unit 235 determines that there is a possibility of collision between the region indicated by the prediction region information and the surrounding object identified by the surrounding object identification unit 241 (step S32: Yes), the process proceeds to step S27.

In step S33, in a case where the determination unit 235 determines that there is a possibility of collision between the region indicated by the prediction region information and a surrounding object, the support control unit 237 restricts the remote operation of the crane boom of the crane 102 (step S33). In step S34, the support control unit 237 identifies the terminal device 301 remotely operating the vehicle 101, and performs call connection between the identified terminal device 301 and the terminal device 302 remotely operating the crane 102 (step S34).

Fourth modification

For example, the alert information generation unit 236 may modify the generated alert information according to the state of the vehicle 101. The warning may be changed according to the positional relationship between the region indicated by the second prediction region information and the surrounding object. FIG. 26 is a table for describing an example of alert information according to the fourth modification.

The table T5 illustrated in FIG. 26 is a table in which the state of the entry of the vehicle indicating the entry of the vehicle 101, the alert information displayed on the terminal device 301 that supports the remote operation of the entering vehicle, and the alert information displayed on the terminal device 302 that supports the remote operation of the crane 102 are associated with each other.

For example, in a case where the state of the entry of the vehicle is a state of waiting for entering a place under the crane hook of the crane 102, alert information the alert information generation unit 236 generates for the terminal device 301 includes a sentence of a warning "not allowed to enter". In a case where the state of the entry of the vehicle is a state of waiting for entering a place under the crane hook of the crane 102, alert information the alert information generation unit 236 generates for the terminal device 302 includes a warning sentence "pull up the hook".

For example, in a case where the state of the entry of the vehicle enters a place under the crane hook of the crane 102 and is in a state of waiting for loading of the container, the alert information the alert information generation unit 236 generates for the terminal device 301 includes a sentence of a warning "not allowed to start". In a case where the state of the entry of the vehicle enters a place under the crane hook of the crane 102 and is in a state of waiting for loading of the container, the alert information the alert information generation unit 236 generates for the terminal device 302 includes a sentence of a warning "operate with caution because you are approaching the vehicle".

For example, in a case where the state of the incoming vehicle is other states such as traveling below the crane hook of the crane 102, alert information the alert information generation unit 236 generates for the terminal device 301 includes a sentence of a warning "stop". In a case where the state of the entry of the vehicle is other states such as traveling below the crane hook of the crane 102, alert information the alert information generation unit 236 generates for the terminal device 302 includes a warning sentence "pull up the hook".

Note that not limited to the vehicle state, the alert information generation unit 236 may change the type of the alert information according to the horizontal positional relationship (as an example, a distance between an incoming vehicle and a crane) between the incoming vehicle and the crane. Furthermore, the alert information generation unit 236 may associate information about output such as display/non-display of the generated alert information with each of the terminal device 301 and the terminal device 302 for each alert information.

FIG. 27 is a flowchart illustrating an example of processing of the remote operation support device according to the fourth modification. Note that the flow of processing described below is an example, and it is also possible to change the processing order, delete some processing, and add other processing. Note that, in FIG. 27, description of processing similar to that in FIG. 17 will be omitted.

In step S41, the alert information generation unit 236 may modify the generated alert information according to the state of the vehicle 101. In step S42, the output unit 238 outputs the generated alert information modified by the alert information generation unit 236 to the terminal device 301 and the terminal device 302 (step S42).

Fifth modification

For example, in the above-described embodiment, in a case where there is a possibility of collision between the region indicated by the first prediction region information and a surrounding object, the support control unit 237 restricts the remote operation. In a case where the surrounding object is an autonomous driving vehicle, the support control unit 237 in the fifth modification may perform control for avoiding entry of the autonomous driving vehicle into the region indicated by the first prediction region information as control for restricting autonomous traveling.

FIGS. 28 and 29 are schematic diagrams for describing control for restricting autonomous traveling according to a fifth modification. FIG. 28 illustrates a state of the vehicle 101 before the autonomous traveling is restricted, and FIG. 28 illustrates a state of the vehicle 101 after the autonomous traveling is restricted.

FIG. 28 illustrates a vehicle 1023, prediction region information A7, prediction region information A8, and an expected entry route R1 of the vehicle 1023. Here, the prediction region information A7 is first prediction region information, and the prediction region information A8 is second prediction region information. FIG. 29 illustrates the vehicle 1023, the prediction region information A7, the prediction region information A8, and an avoidance route R2 of the vehicle 1023. Note that the vehicle 1023 illustrated in FIGS. 28 and 29 may be a surrounding object identified by the surrounding object identification unit 241 described above.

When the vehicle 1023 travels along the expected entry route R1 illustrated in FIG. 28, the vehicle may enter the region of the prediction region information A7 and collide. At this time, the support control unit 237 generates the avoidance route R2 as control for avoiding entry of the vehicle 1023 into the region indicated by the prediction region information A7 as control for restricting autonomous traveling. As a result, the vehicle 1023 can avoid entry of the vehicle 1023 into the region indicated by the prediction region information A7, and can travel on the avoidance route R2. Note that the control for restricting the autonomous traveling by the support control unit 237 is not restricted to the generation of the avoidance route R2, and may be, for example, control for stopping the traveling of the vehicle 1023.

Sixth modification

Although the form in which the vehicle 101 of the above-described embodiment is intended for remote operation is described, the vehicle 101 is not limited thereto, and may be applied to a vehicle 101 on which a terminal device capable of communicating with the remote operation support device 20 is mounted. That is, the vehicle 101 is controlled to be able to travel by the driver without autonomously traveling.

FIG. 30 is a schematic diagram illustrating an example of a display screen according to the sixth modification. A display screen 328 according to the sixth modification is a screen to be displayed on a terminal device that is mounted on the vehicle 101 and can communicate with the remote operation support device 20. A display screen 328 illustrated in FIG. 30 illustrates a message M31 indicating the name of the operator who operates the crane 102, a message M32 indicating the current state of the vehicle 101, a message M33 indicating the next destination of the vehicle 101, a schematic diagram M34 including prediction region information in the vehicle 101 and the crane 102, a schematic diagram M35 indicating the current travel route of the vehicle 101, and a message M36 indicating whether the vehicle 101 is allowed to enter a place under the crane hook.

The message M31 is an example including "crane A operator name" which is an example of a sentence indicating the operator name of operating the crane 102. The message M32 is an example including "vehicle state: waiting for entry permission" which is an example of a sentence indicating the current state of the vehicle 101. The message M33 is an example including "next destination: under the crane A" which is an example of a sentence indicating the next destination of the vehicle 101. The message M36 is an example including "there is a possibility of collision" which is an example of a sentence indicating whether the vehicle 101 is allowed to enter a place under the crane hook.

Seventh modification

Although the crane 102 of the embodiment described above is intended for remote operation, the crane 102 is not limited thereto, and may be applied to a crane 102 on which a terminal device capable of communicating with the remote operation support device 20 is mounted. That is, the crane 102 is operably controlled by the operator from the operation room included in the crane 102.

FIG. 31 is a schematic diagram illustrating an example of a display screen according to the seventh modification. The display screen 329 according to the seventh modification is a screen to be displayed on a terminal device which is mounted in an operation room of the crane 102 and can communicate with the remote operation support device 20. A display screen 328 illustrated in FIG. 31 illustrates a message M41 indicating the name of the operator who operates the vehicle 101, a schematic diagram M42 indicating the current travel route of the vehicle 101, and a message M43 indicating alert information for the crane 102.

The message M41 is an example including "vehicle 101 operator name" which is an example of a sentence indicating the operator name of operating the vehicle 10. The message M43 is an example including "there is a possibility of collision" which is an example of a sentence of a warning indicating alert information for the crane 102.

Eighth modification

In the embodiment described above, the form in which the crane 102 is a gantry crane is described, but the present invention is not limited thereto, and the crane may be, for example, a truck crane. In a case where the crane 102 is a truck crane, the alert information generation unit 236 may modify the generated alert information according to the state of the truck crane.

FIG. 32 is a table for describing an example of alert information according to the eighth modification. The table T7 illustrated in FIG. 32 is a table in which the state of the crane 102 and the alert information displayed on the terminal device 302 that supports the remote operation of the crane 102 are associated with each other.

For example, in a case where the state of the crane 102 is that the outrigger is not deployed, alert information the alert information generation unit 236 generates for the terminal device 301 includes a warning sentence "deploy the outrigger". In a case where the state of the crane 102 is that the outrigger is deployed and there is a load on the crane hook, alert information the alert information generation unit 236 generates for the terminal device 301 includes a sentence of a warning "operate with caution because you are approaching the vehicle". In a case where the state of the crane 102 is that the outrigger is deployed and there is no load on the crane hook, alert information the alert information generation unit 236 generates for the terminal device 301 includes a warning sentence "pull up the hook".

Ninth modification

For example, the crane 102 may be a crawler crane. In a case where the crane 102 is a crawler crane, the alert information generation unit 236 may modify the generated alert information according to the state of the crawler crane.

FIG. 33 is a table for describing an example of alert information according to a ninth modification. The table T8 illustrated in FIG. 33 is a table in which the state of the crane 102 and the alert information displayed on the terminal device 302 that supports the remote operation of the crane 102 are associated with each other.

For example, in a case where the state of the crane 102 is that there is no load, alert information the alert information generation unit 236 generates for the terminal device 301 includes a sentence of a warning "operate with caution because you are approaching the vehicle". In a case where the state of the crane 102 is that there is a load and the value of the ground contact pressure gauge is an abnormal value, alert information the alert information generation unit 236 generates for the terminal device 301 including a sentence of a warning "there is anomaly in the ground surface, drop out cargo". A case where the state of the crane 102 is that there is a load and the value of the ground contact pressure gauge is a normal value, alert information the alert information generation unit 236 generates for the terminal device 301 includes a warning sentence "pull up the hook".

Tenth modification

In the embodiment described above, the form in which the vehicle 101 is the crane 102 as an object that may collide is described, but the present invention is not limited thereto. For example, other than the crane 102, the present invention may be applied to a bollard or a gate bar that prevents entry of the vehicle 101, a shutter that stores the vehicle 101 in a parking lot, and the like.

In the case of the bollard, for example, alert information the alert information generation unit 236 generates for the vehicle 101 includes a sentence "the bollard is rising". In the case of the gate bar, for example, the alert information generated for the vehicle 101 by the alert information generation unit 236 includes a sentence "the gate bar is coming down". In the case of the shutter, for example, alert information the alert information generation unit 236 generates for the vehicle 101 includes a sentence "the shutter is coming down ".

Eleventh modification

For example, the remote operation target is not limited to the vehicle 101, and may be a boarding bridge that allows passengers and occupants to get on and off an airplane or the like from a terminal in an airport.

FIG. 34 is a schematic diagram illustrating an example of a display screen according to the eleventh modification.

A display screen 331 illustrated in FIG. 34 is a display screen displayed by the display device 320 of the terminal device 301. The display screen 331 illustrates prediction region information A9, prediction region information A10, a message M1 indicating a boarding bridge ID "51" of the boarding bridge, and an icon M6 with which a call can be made with a person existing around the boarding bridge. Here, the prediction region information A9 is first prediction region information, and the prediction region information A10 is second prediction region information.

The message M7 on the display screen 331 is an example including "you are approaching the airplane" which is an example of a sentence indicating the positional relationship between the distal end of the boarding bridge and the airplane. The message M8 on the display screen 331 is an example including "estimated distance (shortest): 5 m" which is an example of a sentence indicating the estimated distance between the distal end of the boarding bridge and the door of the airplane. The message M22 on the display screen 331 is an example including "moving" which is an example of a sentence indicating the operating state of the boarding bridge.

FIG. 35 is a flowchart illustrating an example of processing of the remote operation support device 20 according to the eleventh modification.

The reception unit 231 receives the camera image captured by the camera mounted at the distal end of the boarding bridge transmitted by the boarding bridge (step S51). The delay information calculation unit 232 calculates delay information indicating a delay time required until the display device 320 of the terminal device 301 draws an image with the time captured by the camera of the boarding bridge as a base point (step S52). The crane hook position calculation unit 233 calculates door position information indicating the position of the door of the airplane by using the camera image captured by the camera of the boarding bridge (step S53).

Based on the delay information calculated by the delay information calculation unit 232 and the position of the door included in the door position information calculated by the crane hook position calculation unit 233, the prediction region information calculation unit 234 calculates prediction region information indicating a region, in the image, where the door is predicted to be likely to be present (step S54). The output unit 238 outputs the prediction region information calculated by the prediction region information calculation unit 234 to the terminal device 301 (step S55). The surrounding object identification unit 241 outputs distance information indicating the distance between the door of the airplane and the distal end of the boarding bridge to the terminal device 301 using the camera image (step S56).

Subsequently, the determination unit 235 determines whether there is a possibility of collision between the door of the airplane and the distal end of the boarding bridge based on the region indicated by the prediction region information and the distance information output by the surrounding object identification unit 241 (step S57). Here, when the determination unit 235 determines that there is no possibility of collision between the door of the airplane and the distal end of the boarding bridge (step S57: No), this process ends. On the other hand, when the determination unit 235 determines that there is a possibility of collision between the door of the airplane and the distal end of the boarding bridge (step S57: Yes), the process proceeds to step S58.

In step S58, when the determination unit 235 determines that there is a possibility of collision between the door of the airplane and the distal end of the boarding bridge, the alert information generation unit 236 generates alert information indicating that there is a possibility of collision (step S58). Subsequently, in a case where there is a possibility of collision between the region indicated by the prediction region information and a surrounding object (as an example, an airplane door), the support control unit 237 restricts the remote operation of the boarding bridge (step S59).

Subsequently, the output unit 238 outputs the alert information generated by the alert information generation unit 236 to the terminal device 301 (step S60). In addition, the output unit 238 outputs, to the terminal device 301, control information corresponding to control by the support control unit 237 according to a positional relationship between the region indicated by the prediction region information and a surrounding object (as an example, an airplane door) indicating an object around the distal end of the boarding bridge. When step S60 ends, this routine ends.

Twelfth modification

For example, the remote operation target may be a towing car. In the eleventh modification, a possibility that the distal end of each of both wings of an airplane towed by a towing car to be remotely operated come into contact with a surrounding object will be described. Here, an example of the surrounding object is a boarding bridge. Surrounding objects are not limited to boarding bridges.

FIG. 36 is a schematic diagram illustrating an example of a display screen according to the twelfth modification. A display screen 332 illustrated in FIG. 36 is a display screen displayed by the display device 320 of the terminal device 301. The display screen 332 illustrates prediction region information A11, prediction region information A12, prediction region information A13, prediction region information A14, a message M11 indicating "1" of the boarding bridge ID of the towing car, and an icon M6 with which a call can be made with a person existing around the towing car. Here, the prediction region information A11 and the prediction region information A13 are the first prediction region information, and the prediction region information A12 and the prediction region information A14 are the second prediction region information.

The message M9 on the display screen 332 is an example including "you are approaching the boarding bridge" which is an example of a sentence indicating the positional relationship between the distal end of each of both wings of the airplane and the surrounding object. A region M10 of the display screen 331 shows the result of identifying a surrounding object that may contact the distal end of each of the wings of the airplane. FIG. 36 illustrates the result of identifying a boarding bridge that may contact the left distal end of the airplane. The message M23 on the display screen 332 is an example including "moving" which is an example of a sentence indicating the operation state of the towing car.

FIG. 37 is a flowchart illustrating an example of processing of the remote operation support device 20 according to the twelfth modification.

The reception unit 231 receives the camera image captured by the camera mounted on the towing car transmitted by the towing car (step S61). The delay information calculation unit 232 calculates delay information indicating a delay time required until the display device 320 of the terminal device 301 draws an image with the time captured by the camera of the towing car as a base point (step S62). The crane hook position calculation unit 233 calculates both wing position information indicating the positions of the distal end of each of both wings of the airplane by using the camera image captured by the camera of the towing car (step S63).

The prediction region information calculation unit 234 calculates prediction region information indicating a region, in the image, in which the distal end of each of both wings are predicted to be likely to be present based on the delay information calculated by the delay information calculation unit 232 and the positions of the distal end of each of both wings included in the both wing position information calculated by the crane hook position calculation unit 233 (step S64). The output unit 238 outputs the prediction region information calculated by the prediction region information calculation unit 234 to the terminal device 301 (step S65). The surrounding object identification unit 241 identifies a surrounding object existing in the region indicated by the prediction region information from the camera image received by the reception unit 231 (step S66). Here, the surrounding object is assumed to be, for example, a boarding bridge.

Subsequently, the determination unit 235 determines whether there is a possibility of collision between the distal end of each of both wings of the airplane and the boarding bridge based on the region indicated by the prediction region information and the surrounding object identified by the surrounding object identification unit 241 (step S67). Here, when the determination unit 235 determines that there is no possibility of collision between the distal end of each of both wings of the airplane and the boarding bridge (step S67: No), this process ends. On the other hand, when the determination unit 235 determines that there is a possibility of collision between the distal end of each of both wings of the airplane and the boarding bridge (step S67: Yes), the process proceeds to step S68.

In step S68, when the determination unit 235 determines that there is a possibility of collision between the distal end of each of both wings of the airplane and the boarding bridge, the alert information generation unit 236 generates alert information indicating that there is a possibility of collision (step S68). Subsequently, in a case where there is a possibility of collision between the region indicated by the prediction region information and a surrounding object (as an example, a boarding bridge), the support control unit 237 restricts the remote operation of the towing car (step S69).

Subsequently, the output unit 238 outputs the alert information generated by the alert information generation unit 236 to the terminal device 301 (step S70). In addition, the output unit 238 outputs, to the terminal device 301, control information corresponding to control by the support control unit 237 according to a positional relationship between the region indicated by the prediction region information and a surrounding object (as an example, a boarding bridge) indicating an object around the distal end of each of both wings of the airplane. When step S70 ends, this routine ends.

Thirteenth modification

Although the form in which the vehicle 101 of the above-described embodiment is intended for remote operation is described, the vehicle 101 is not limited thereto, and may be controlled to be able to travel by a driver who actually drives the vehicle 101 using augmented reality (AR) glasses or the like capable of communicating with the remote operation support device 20.

Fourteenth modification

The above-described delay information is information indicating a time from when an image is captured to when the image is drawn, but the present information is not limited thereto. For example, the delay information may be a delay time indicating a round-trip delay based on a transmission delay when the camera image captured by the camera 120 of the vehicle 101 is transmitted to the remote operation support device 20 and a transmission delay when the remote operation support device 20 transmits the operation information to the vehicle 101.

Fifteenth modification

In the above-described embodiment, a mode in which the vehicle 101 is an autonomous driving vehicle is described, but the present invention is not limited thereto, and the vehicle may be a remotely controllable vehicle (for example, a vehicle capable of radio control).

Sixteenth modification

Although the display form in which the prediction region information displayed on the above-described display screen is elliptical display is described, but the present invention is not limited thereto, and the prediction region information may be, for example, a display form of arrow display.

The above-described embodiment can be arbitrarily combined with the above-described modifications, or the above-described modifications may be arbitrarily combined.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

**1.** A method of remote control, comprising
outputting prediction region information indicating a region, in an image, in which a moving object is predicted to be likely to be present based on delay information indicating a time from when the image is captured to when the image is drawn and a position of the moving object caught in the image.

**2.** The method of remote control according to claim 1, the method further comprising:
performing control according to a positional relationship between a region indicated by the prediction region information and a surrounding object indicating an object around the moving object.

**3.** The method of remote control according to claim 2, the method further comprising:
restricting a remote operation of a crane to be remotely operated in a case where there is a possibility of collision between a region indicated by the prediction region information and the surrounding object.

**4.** The method of remote control according to claim 3, wherein
in a case where the surrounding object is an autonomous driving vehicle, control for restricting the remote operation includes performing control for prohibiting the autonomous driving vehicle from entering a place under a crane hook of the crane.

**5.** The method of remote control according to claim 3, wherein
control for restricting the remote operation includes control for restricting a maximum speed of a boom which is an arm portion to which a crane hook of the crane is attached and which is turnable.

**6.** The method of remote control according to claim 2, the method further comprising:
outputting a warning in a case where there is a possibility of collision between a region indicated by the prediction region information and the surrounding object.

**7.** The method of remote control according to claim 2, wherein

the prediction region information includes at least first prediction region information and second prediction region information indicating a region where a probability that the moving object exists is lower than a region indicated by the first prediction region information, and
control according to a positional relationship between a region indicated by the first prediction region information and the surrounding object and control according to a positional relationship between a region indicated by the second prediction region information and the surrounding object are different.

**8.** The method of remote control according to claim 7, the method comprising:
restricting autonomous traveling in a case where there is a possibility of collision between the region indicated by the first prediction region information and the surrounding object.

**9.** The method of remote control according to claim 7, the method comprising:

outputting a warning in a case where there is a possibility of collision between the region indicated by the second prediction region information and the surrounding object.

**10.** The method of remote control according to claim 8, wherein
in a case where the surrounding object is an autonomous driving vehicle, control for restricting the autonomous traveling includes performing control for avoiding entry of the autonomous driving vehicle into the region indicated by the first prediction region information.

**11.** The method of remote control according to claim 9, wherein
the warning is changed according to a positional relationship between the region indicated by the second prediction region information and the surrounding object.

**12.** A terminal device operated by an operator who remotely operates a vehicle,

the terminal device comprising a display control unit that performs control to display prediction region information transmitted by a remote operation support device that supports a remote operation of the vehicle, wherein
the prediction region information indicates a region, in the image, in which a moving object is predicted to be likely to be present based on delay information indicating a time from when an image is captured to when the image is drawn and a position of the moving object caught in the image.

**13.** A terminal device operated by an operator who operates a moving object,

the terminal device comprising a display control unit that performs control to display prediction region information transmitted by an operation support device that supports an operation of the moving object, wherein
the prediction region information indicates a region, in the image, in which the moving object is predicted to be likely to be present based on delay information indicating a time from when an image is captured to when the image is drawn and a position of the moving object caught in the image.

**14.** A program causing a computer to perform:
outputting prediction region information indicating a region, in an image, in which a moving object is predicted to be likely to be present based on delay information indicating a time from when the image is captured to when the image is drawn and a position of the moving object caught in the image.

FIG.1

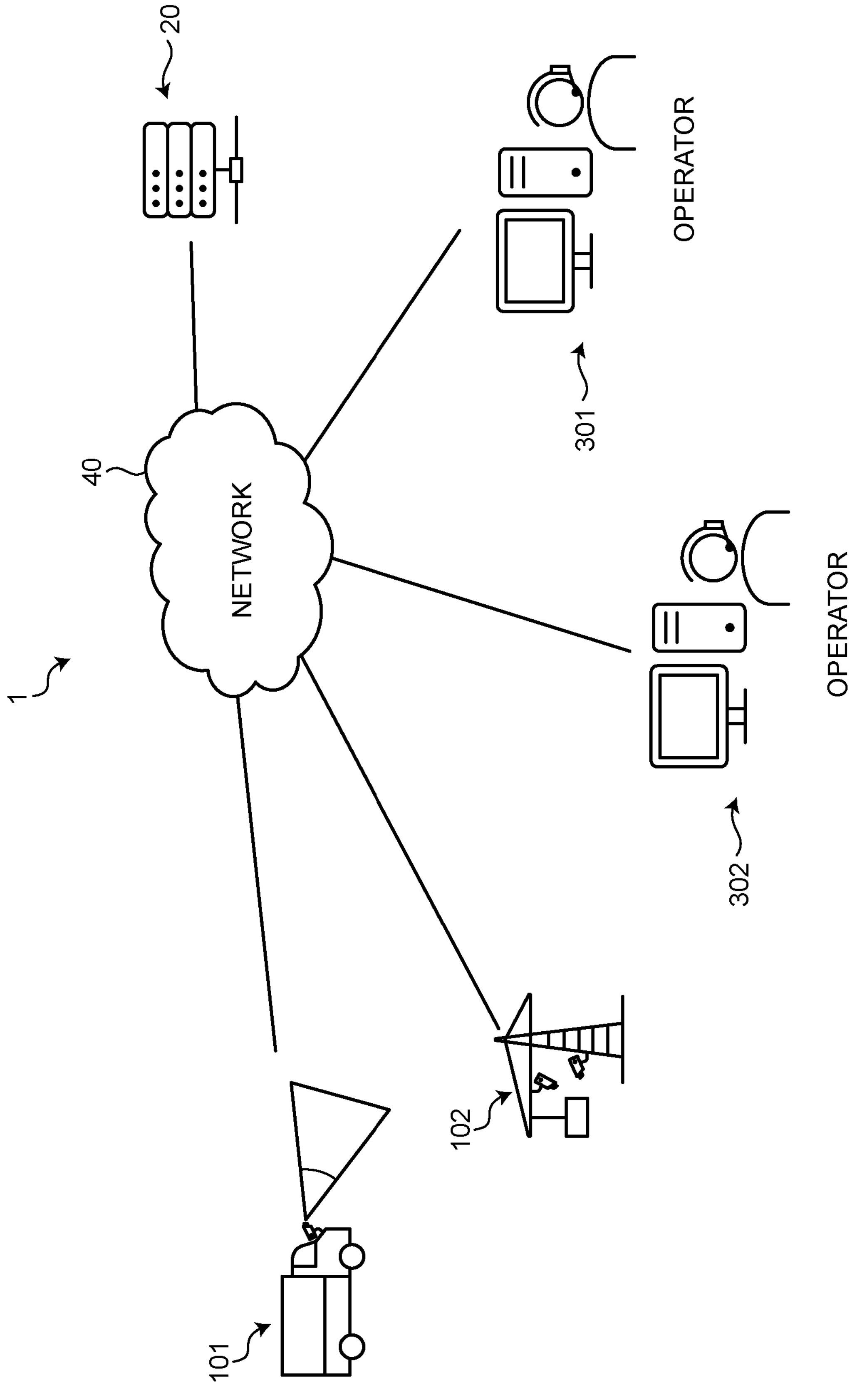

FIG.2

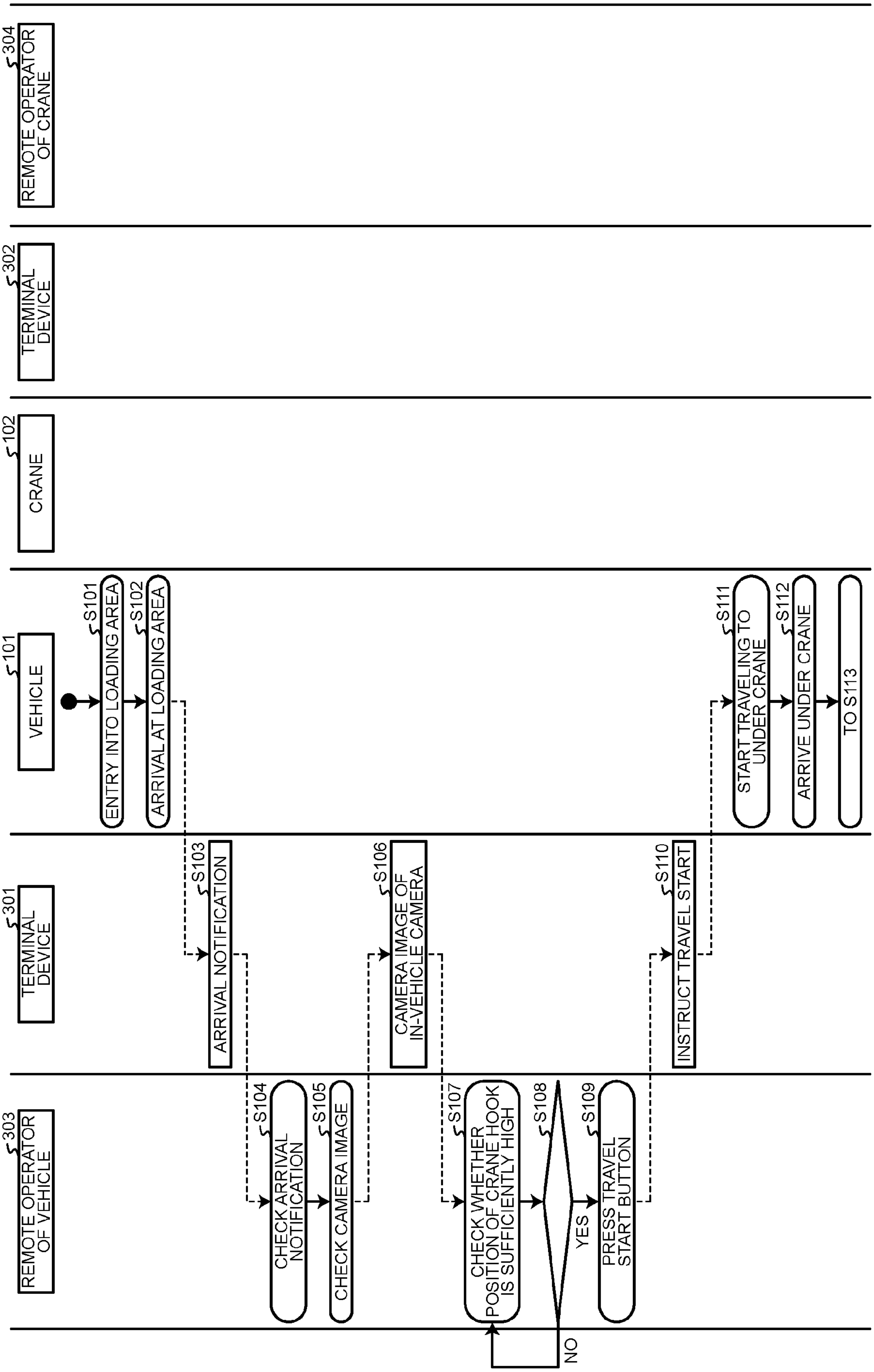
REMOTE OPERATOR OF CRANE
304
TERMINAL DEVICE
302
CRANE
102
VEHICLE
101
TERMINAL DEVICE
301
REMOTE OPERATOR OF VEHICLE
303
ENTRY INTO LOADING AREA
S101
ARRIVAL AT LOADING AREA
S102
ARRIVAL NOTIFICATION
S103
CHECK ARRIVAL NOTIFICATION
S104
CHECK CAMERA IMAGE
S105
CAMERA IMAGE OF IN-VEHICLE CAMERA
S106
CHECK WHETHER POSITION OF CRANE HOOK IS SUFFICIENTLY HIGH
S107
S108
YES
NO
PRESS TRAVEL START BUTTON
S109
INSTRUCT TRAVEL START
S110
START TRAVELING TO UNDER CRANE
S111
ARRIVE UNDER CRANE
S112
TO S113

FIG.3

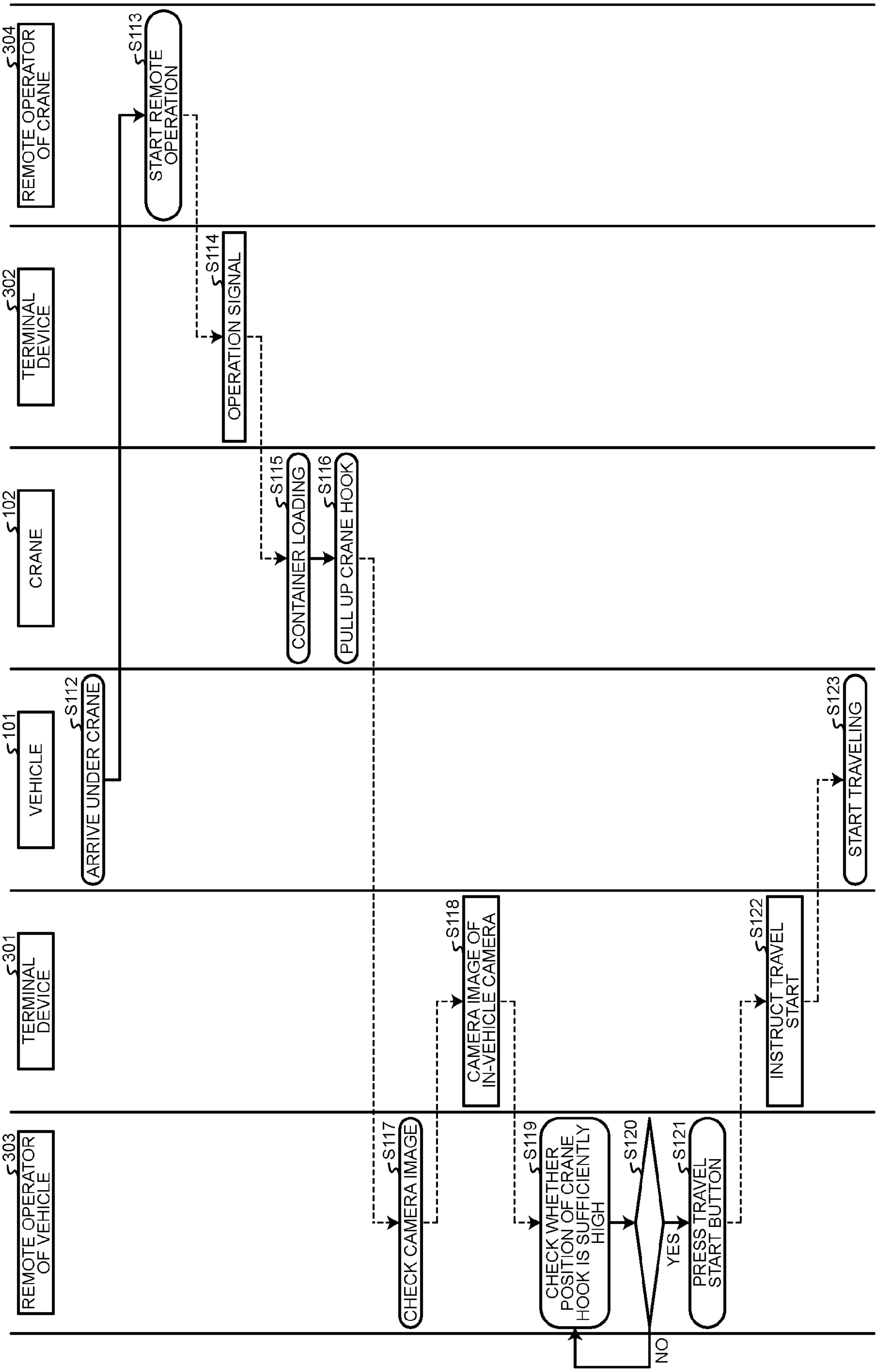

REMOTE OPERATOR OF CRANE
304
TERMINAL DEVICE
302
CRANE
102
VEHICLE
101
TERMINAL DEVICE
301
REMOTE OPERATOR OF VEHICLE
303
S112
ARRIVE UNDER CRANE
S113
START REMOTE OPERATION
S114
OPERATION SIGNAL
S115
CONTAINER LOADING
S116
PULL UP CRANE HOOK
S117
CHECK CAMERA IMAGE
S118
CAMERA IMAGE OF IN-VEHICLE CAMERA
S119
CHECK WHETHER POSITION OF CRANE HOOK IS SUFFICIENTLY HIGH
S120
YES
NO
S121
PRESS TRAVEL START BUTTON
S122
INSTRUCT TRAVEL START
S123
START TRAVELING

FIG.4

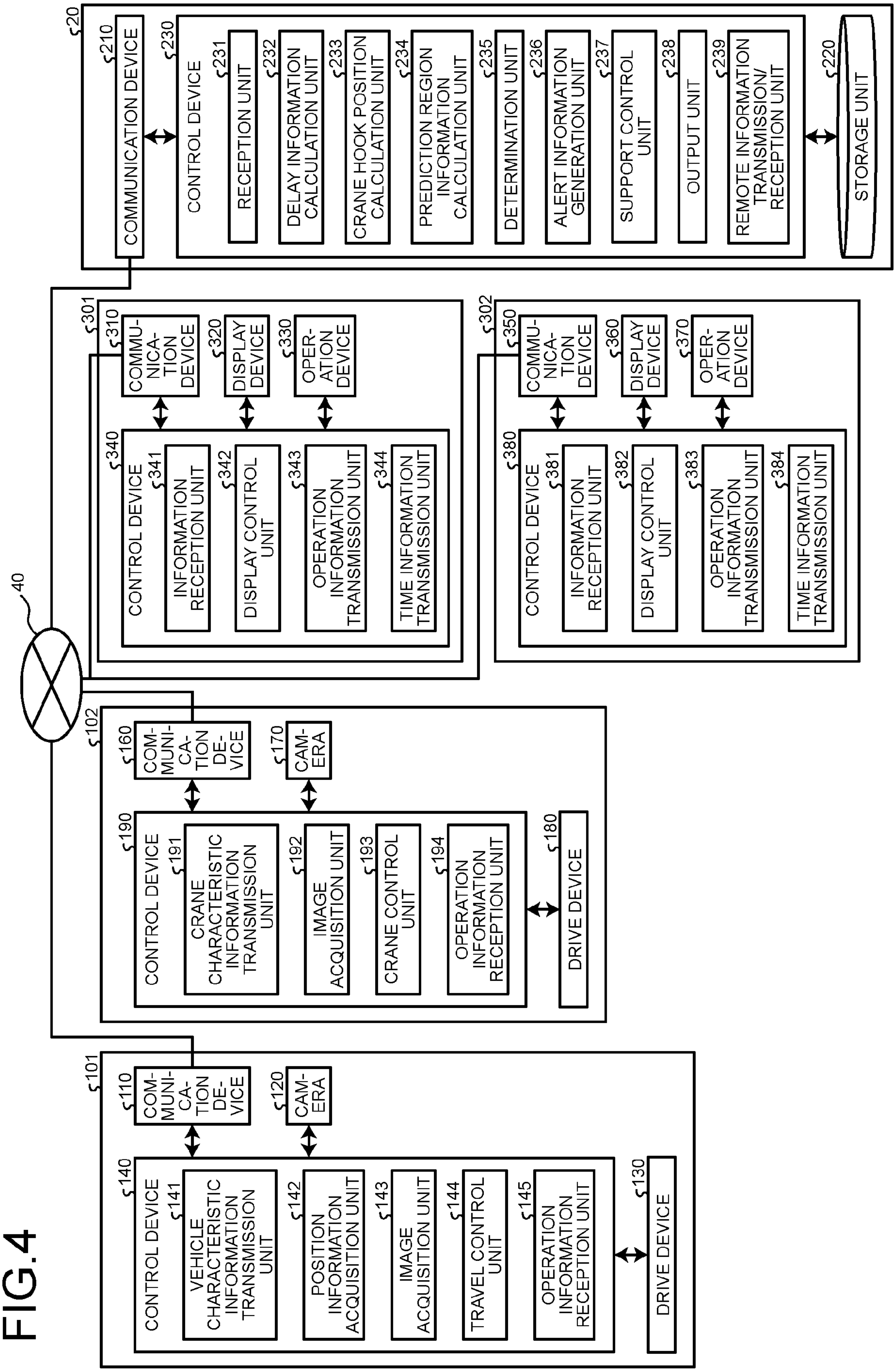
20
210 COMMUNICATION DEVICE
230 CONTROL DEVICE
231 RECEPTION UNIT
232 DELAY INFORMATION CALCULATION UNIT
233 CRANE HOOK POSITION CALCULATION UNIT
234 PREDICTION REGION INFORMATION CALCULATION UNIT
235 DETERMINATION UNIT
236 ALERT INFORMATION GENERATION UNIT
237 SUPPORT CONTROL UNIT
238 OUTPUT UNIT
239 REMOTE INFORMATION TRANSMISSION/ RECEPTION UNIT
220 STORAGE UNIT
301
310 COMMU-NICA-TION DEVICE
320 DISPLAY DEVICE
330 OPER-ATION DEVICE
340 CONTROL DEVICE
341 INFORMATION RECEPTION UNIT
342 DISPLAY CONTROL UNIT
343 OPERATION INFORMATION TRANSMISSION UNIT
344 TIME INFORMATION TRANSMISSION UNIT
302
350 COMMU-NICA-TION DEVICE
360 DISPLAY DEVICE
370 OPER-ATION DEVICE
380 CONTROL DEVICE
381 INFORMATION RECEPTION UNIT
382 DISPLAY CONTROL UNIT
383 OPERATION INFORMATION TRANSMISSION UNIT
384 TIME INFORMATION TRANSMISSION UNIT
40
102
160 COM-MUNI-CA-TION DE-VICE
170 CAM-ERA
190 CONTROL DEVICE
191 CRANE CHARACTERISTIC INFORMATION TRANSMISSION UNIT
192 IMAGE ACQUISITION UNIT
193 CRANE CONTROL UNIT
194 OPERATION INFORMATION RECEPTION UNIT
180 DRIVE DEVICE
101
110 COM-MUNI-CA-TION DE-VICE
120 CAM-ERA
140 CONTROL DEVICE
141 VEHICLE CHARACTERISTIC INFORMATION TRANSMISSION UNIT
142 POSITION INFORMATION ACQUISITION UNIT
143 IMAGE ACQUISITION UNIT
144 TRAVEL CONTROL UNIT
145 OPERATION INFORMATION RECEPTION UNIT
130 DRIVE DEVICE

FIG.5

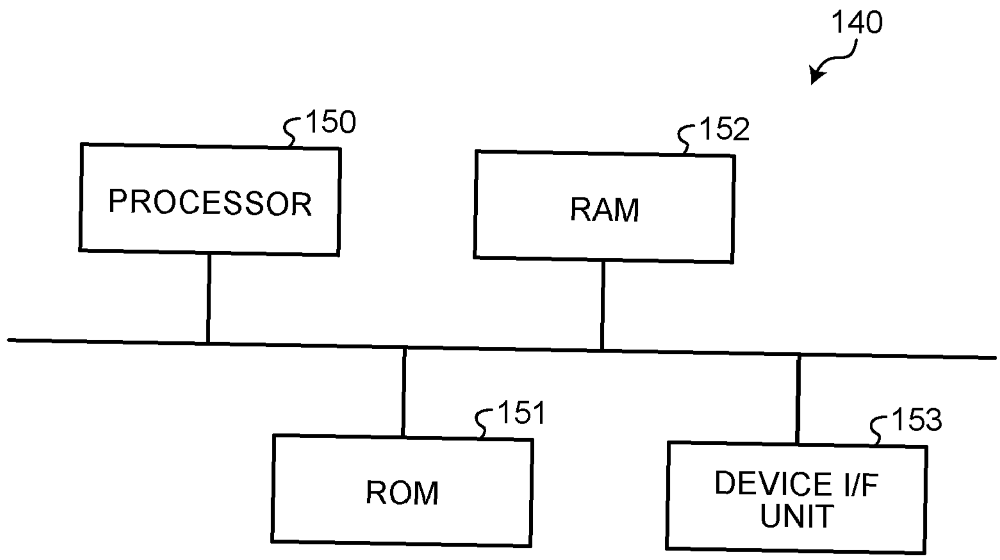


FIG.6

T1

| VIDEO FRAME ID | VIDEO ACQUISITION TIME | VIDEO DRAWING TIME |
|---|---|---|
| 1 | yyyy-mm-ddThh: mm: 01Z | yyyy-mm-ddThh: mm: 21Z |
| 2 | yyyy-mm-ddThh: mm: 03Z | yyyy-mm-ddThh: mm: 23Z |
| 3 | yyyy-mm-ddThh: mm: 06Z | yyyy-mm-ddThh: mm: 26Z |
| ... | ... | ... |

FIG.7

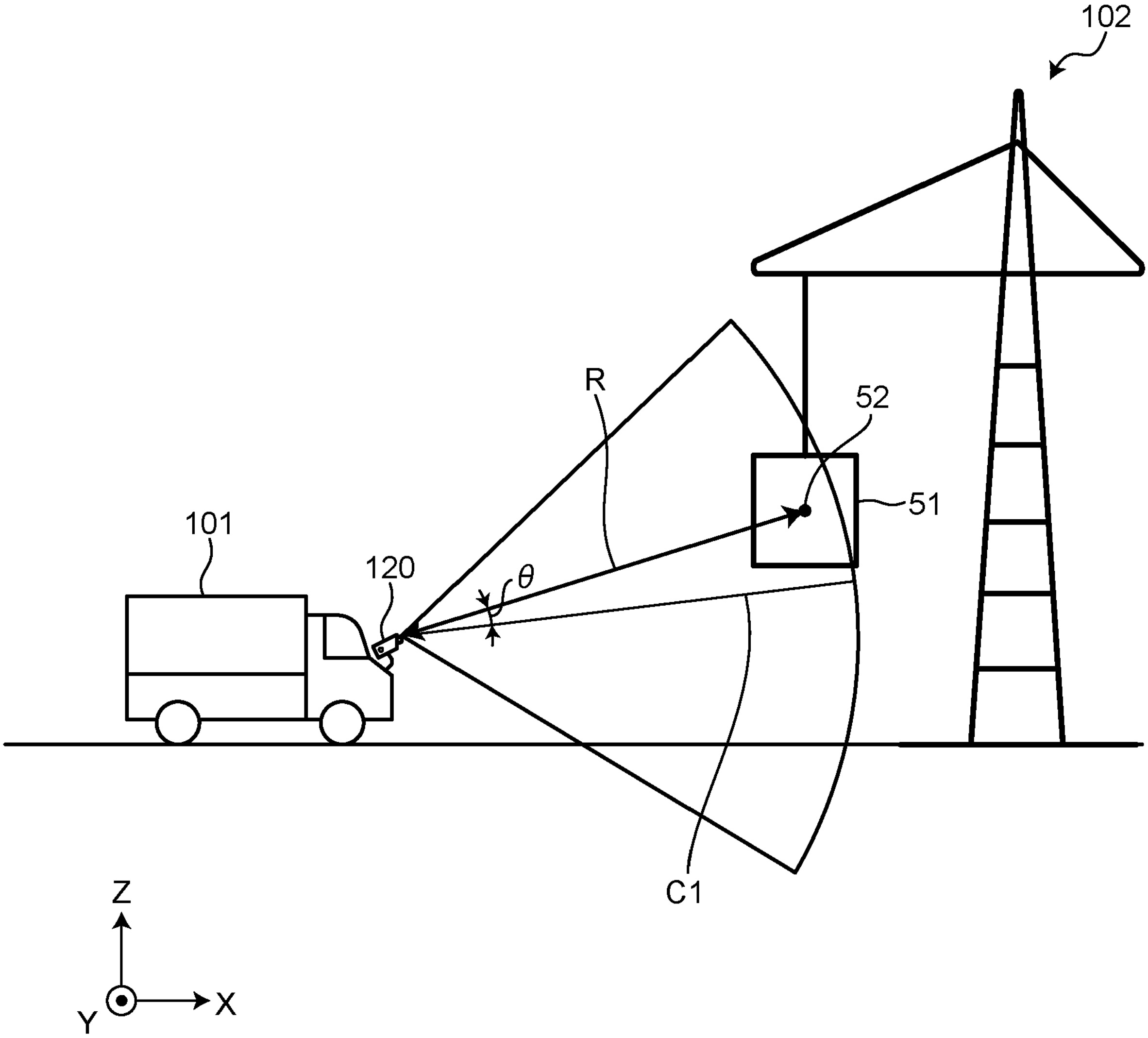

FIG.8

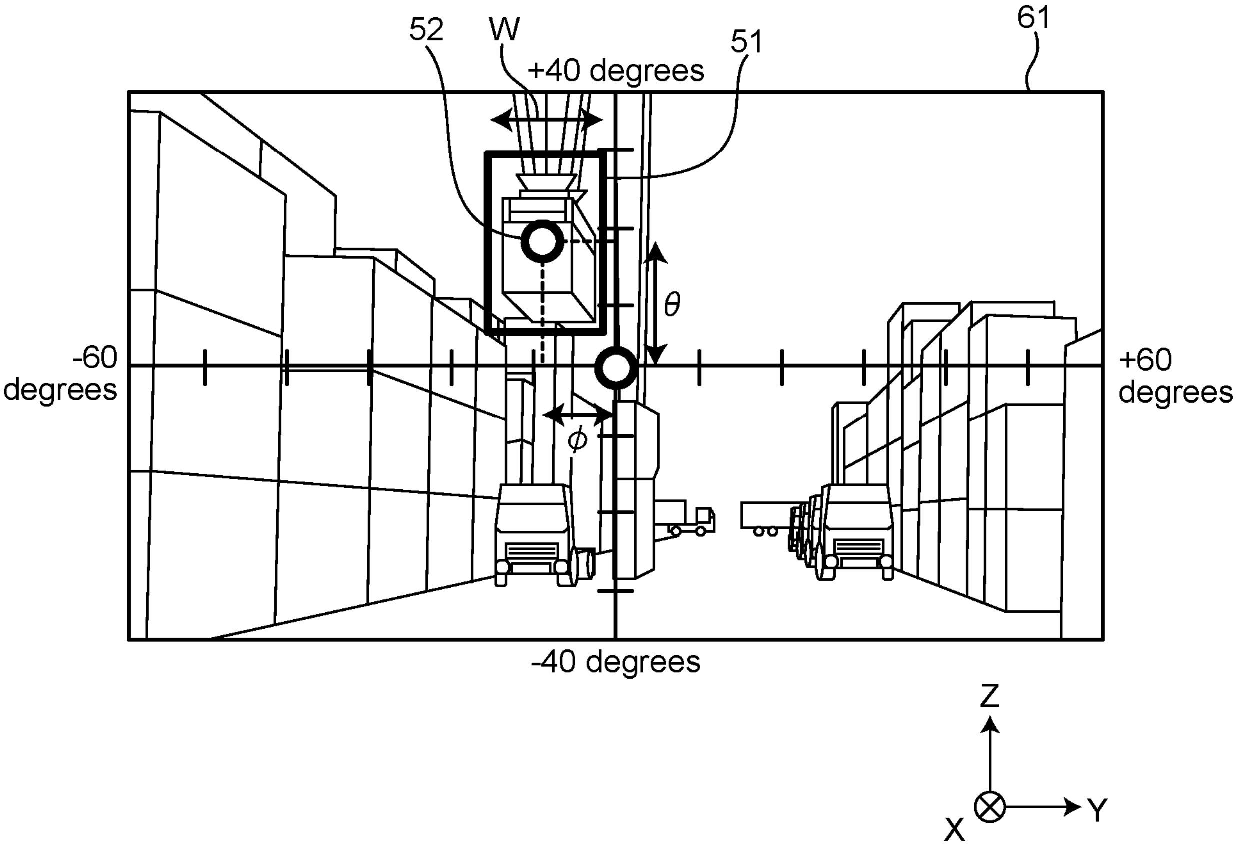


FIG.9

T2

| θ [deg] | φ [deg] | W [pixel] | R [m] |
|---|---|---|---|
| 0 | 0 | 50 | 3 |
| 0 | 0 | 40 | 5 |
| 0 | 0 | 30 | 10 |
| 0 | 0 | 20 | 20 |

FIG.10

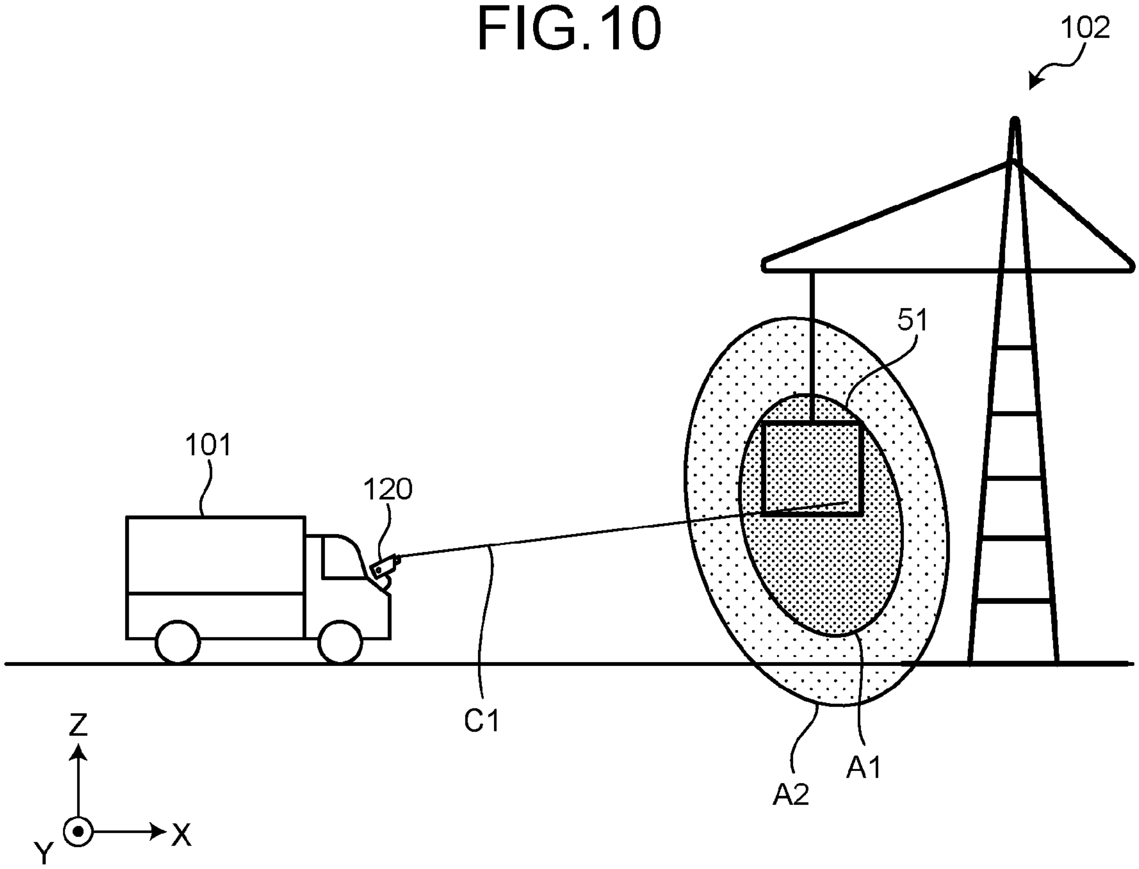


FIG.11

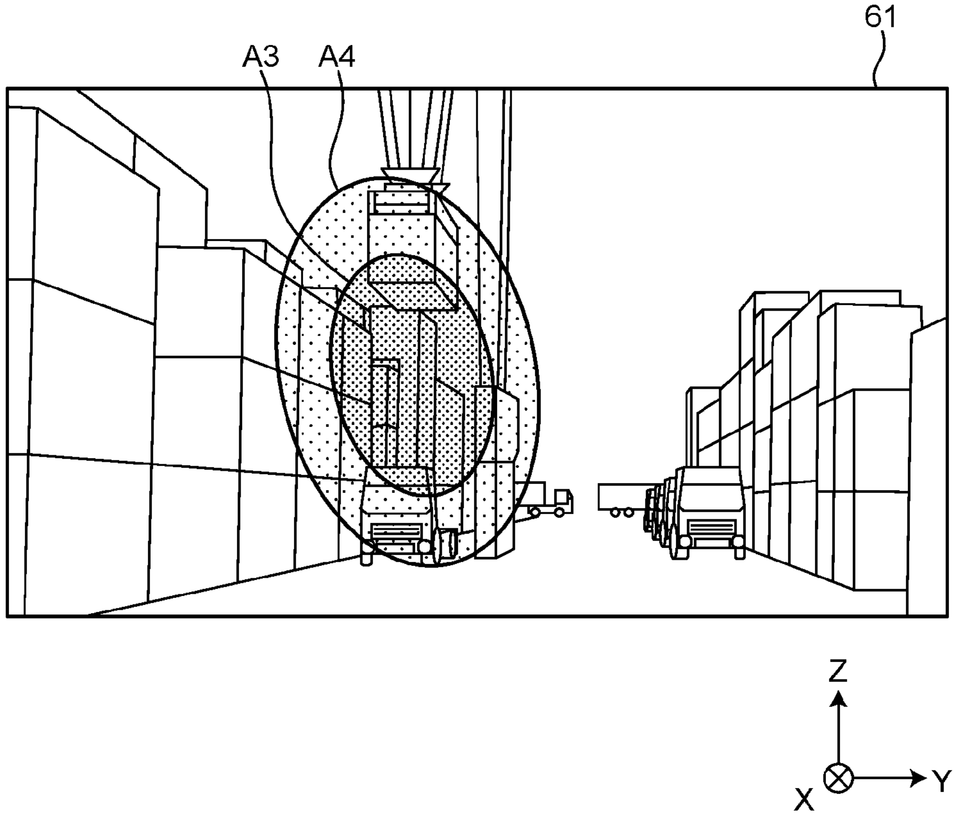

FIG.12

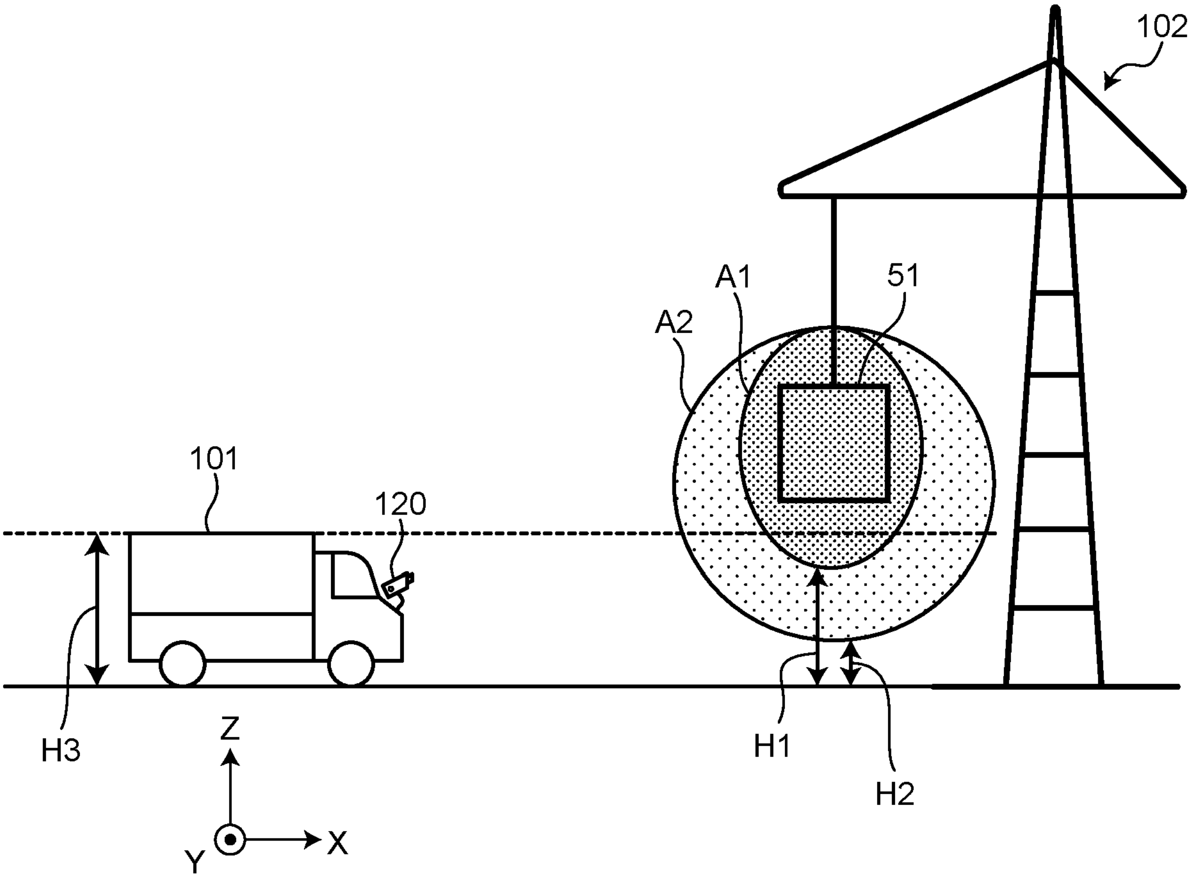


FIG.13

T3

| VEHICLE ID | VEHICLE HEIGHT [m] |
|---|---|
| 10 | 4 |
| 11 | 3 |
| 12 | 2 |
| ... | ... |

FIG.14

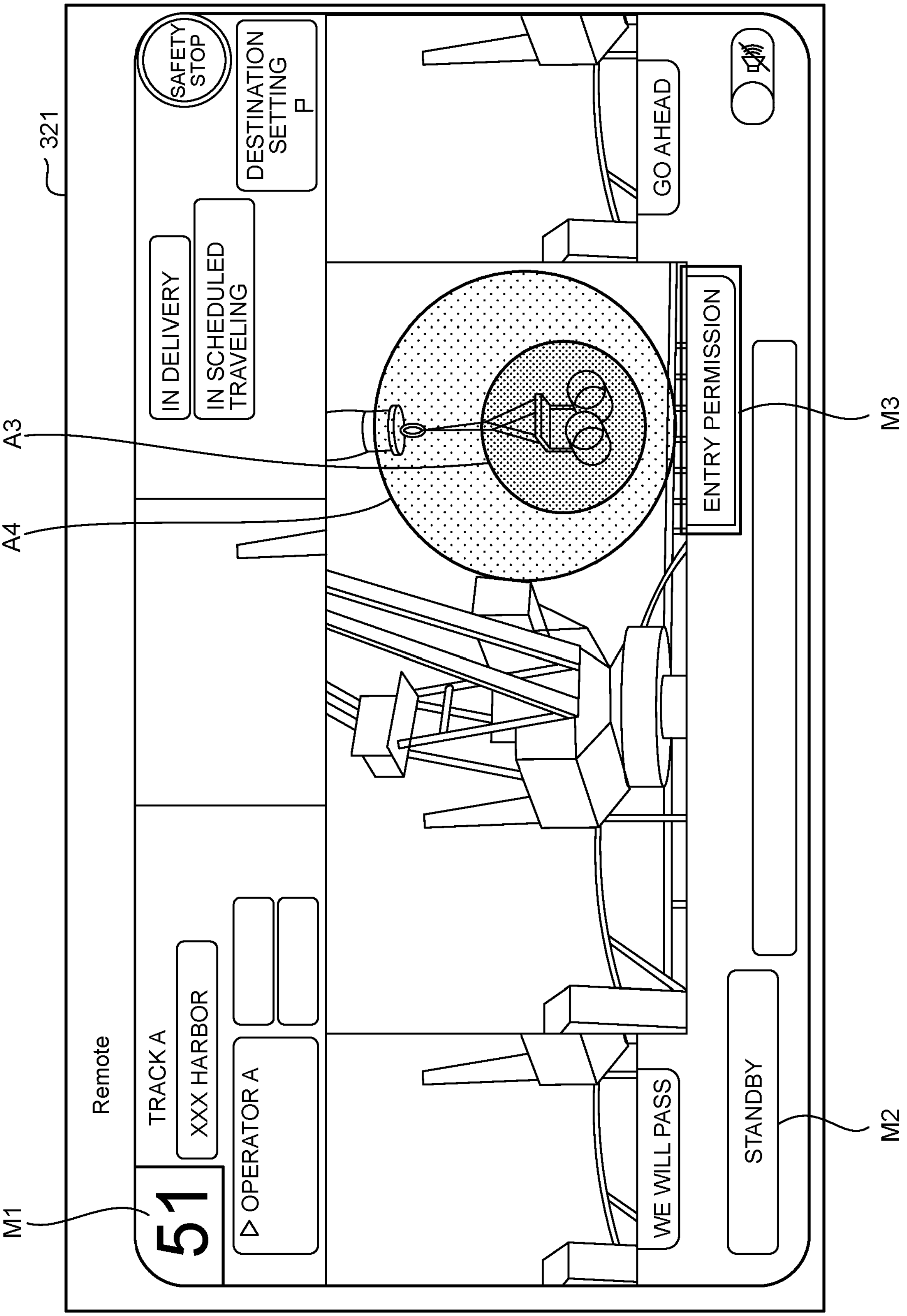
321
M1
A4
A3
M3
M2
51
Remote
TRACK A
XXX HARBOR
OPERATOR A
IN DELIVERY
IN SCHEDULED TRAVELING
SAFETY STOP
DESTINATION SETTING P
GO AHEAD
ENTRY PERMISSION
WE WILL PASS
STANDBY

FIG.15

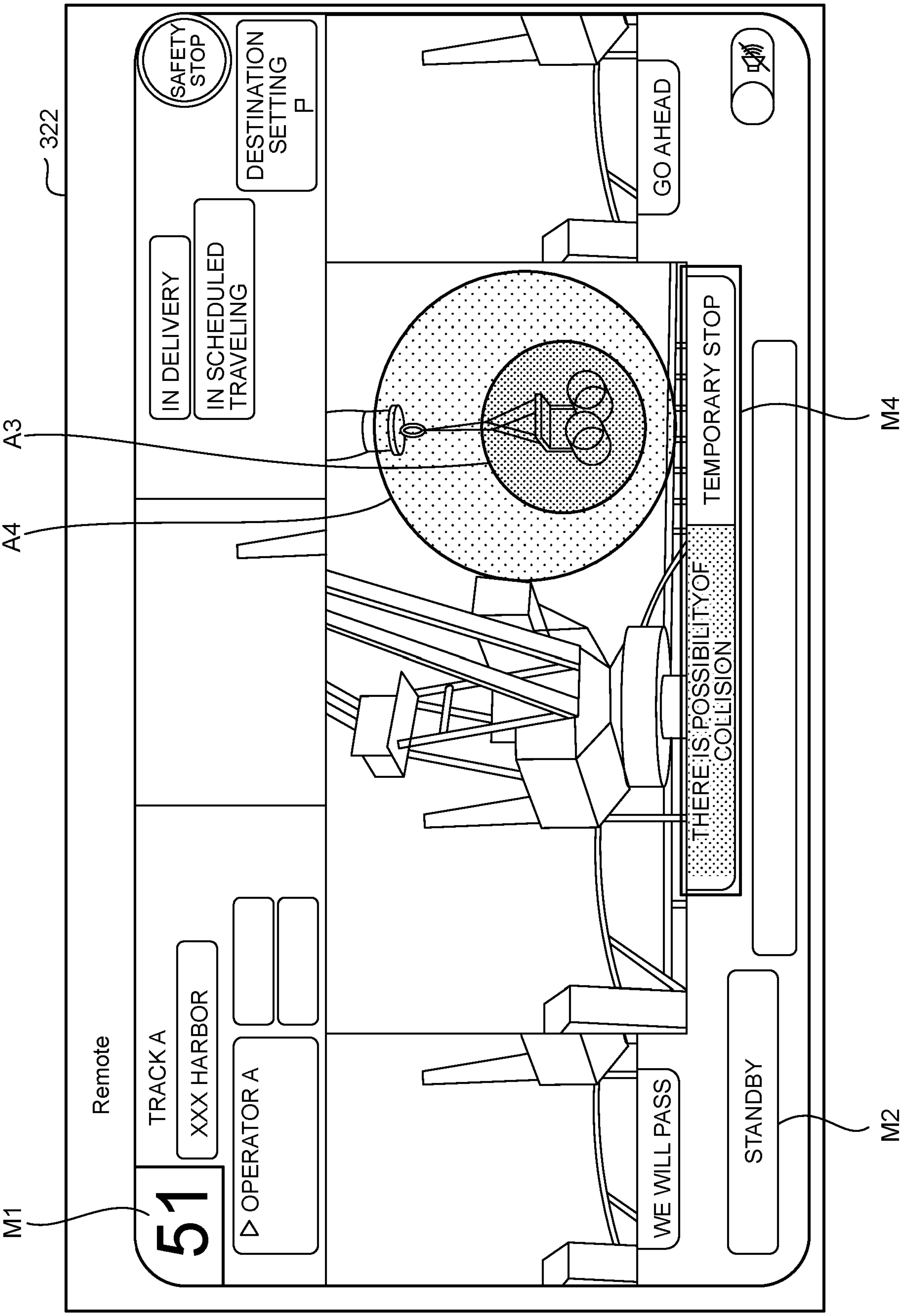
322
SAFETY STOP
DESTINATION SETTING
P
IN DELIVERY
IN SCHEDULED TRAVELING
GO AHEAD
A3
A4
TEMPORARY STOP
THERE IS POSSIBILITY OF COLLISION
M4
Remote
TRACK A
XXX HARBOR
OPERATOR A
51
M1
WE WILL PASS
STANDBY
M2

FIG.16

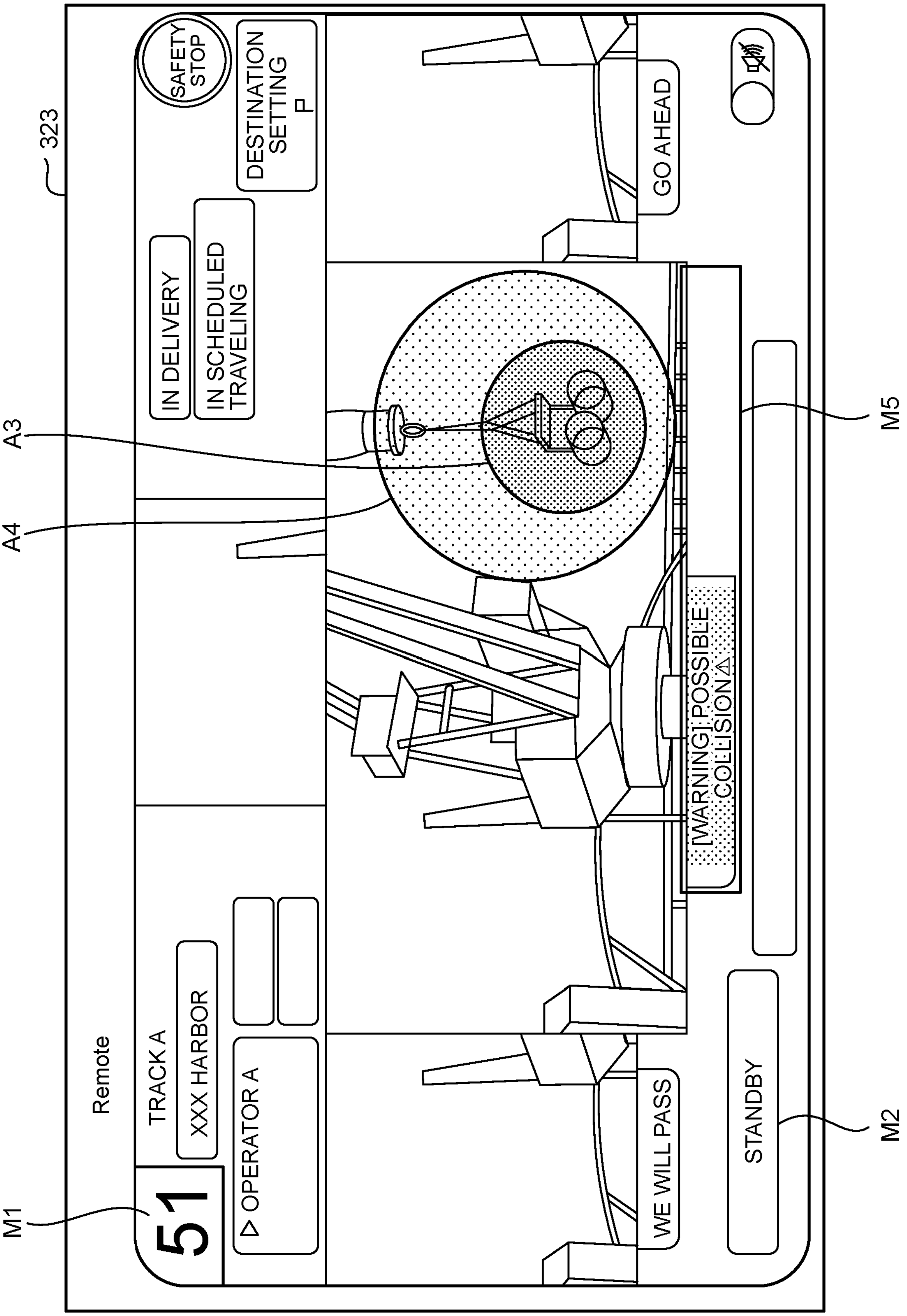
323
A3
A4
M1
51
Remote
TRACK A
XXX HARBOR
▷ OPERATOR A
IN DELIVERY
IN SCHEDULED TRAVELING
SAFETY STOP
DESTINATION SETTING
P
[WARNING] POSSIBLE COLLISION ⚠
WE WILL PASS
STANDBY
GO AHEAD
M2
M5

FIG.17

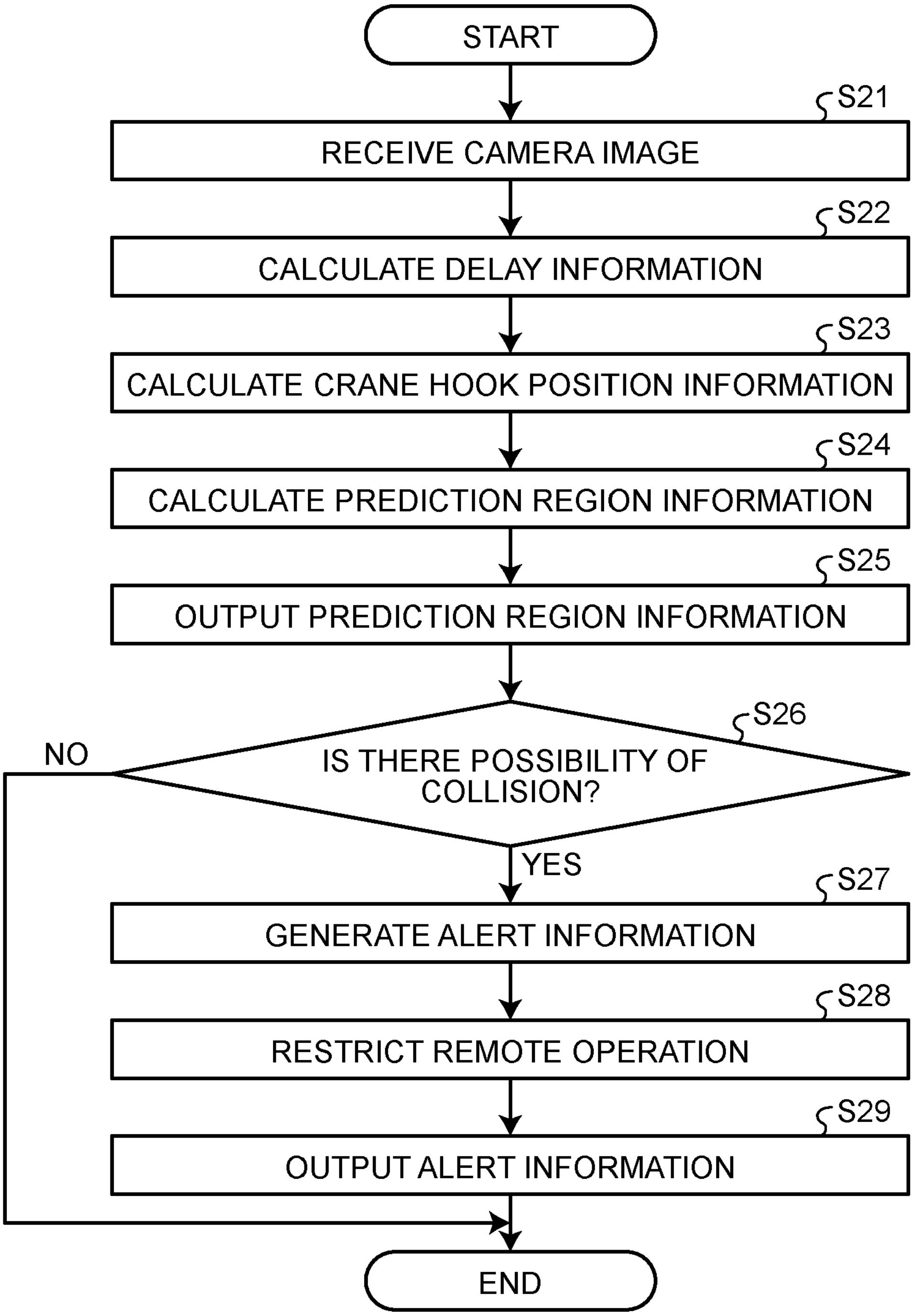
START
S21
RECEIVE CAMERA IMAGE
S22
CALCULATE DELAY INFORMATION
S23
CALCULATE CRANE HOOK POSITION INFORMATION
S24
CALCULATE PREDICTION REGION INFORMATION
S25
OUTPUT PREDICTION REGION INFORMATION
S26
IS THERE POSSIBILITY OF COLLISION?
NO
YES
S27
GENERATE ALERT INFORMATION
S28
RESTRICT REMOTE OPERATION
S29
OUTPUT ALERT INFORMATION
END

FIG.18

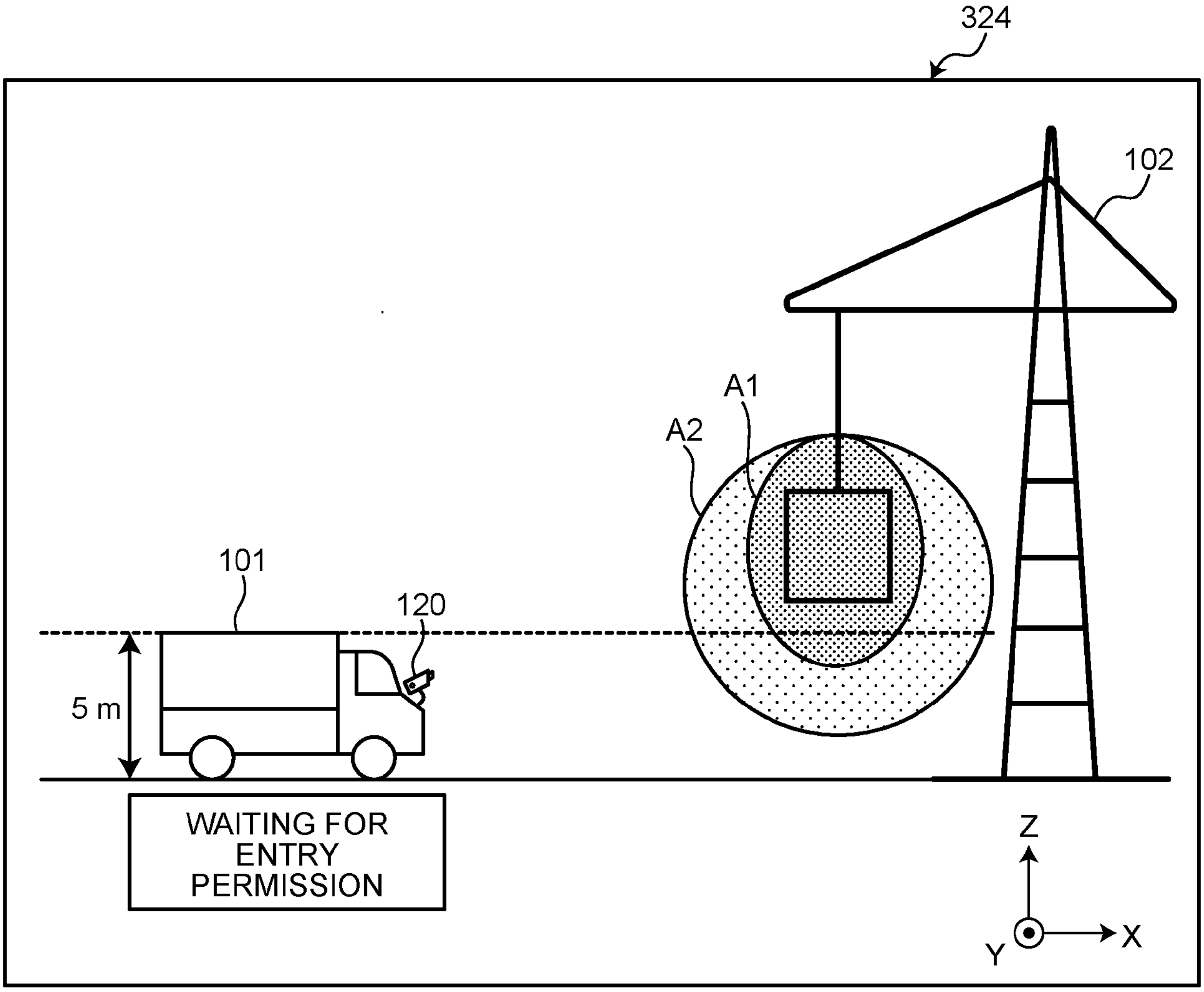

FIG.19

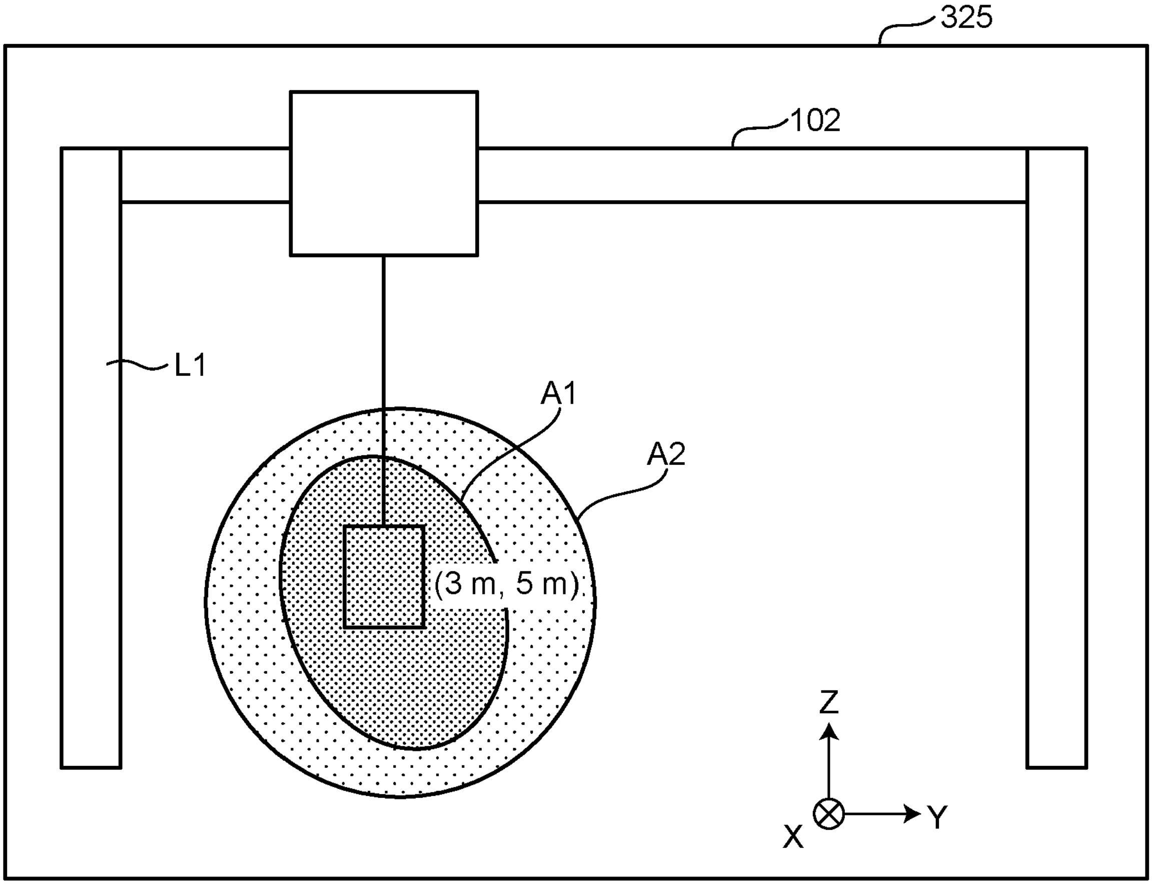

FIG.20

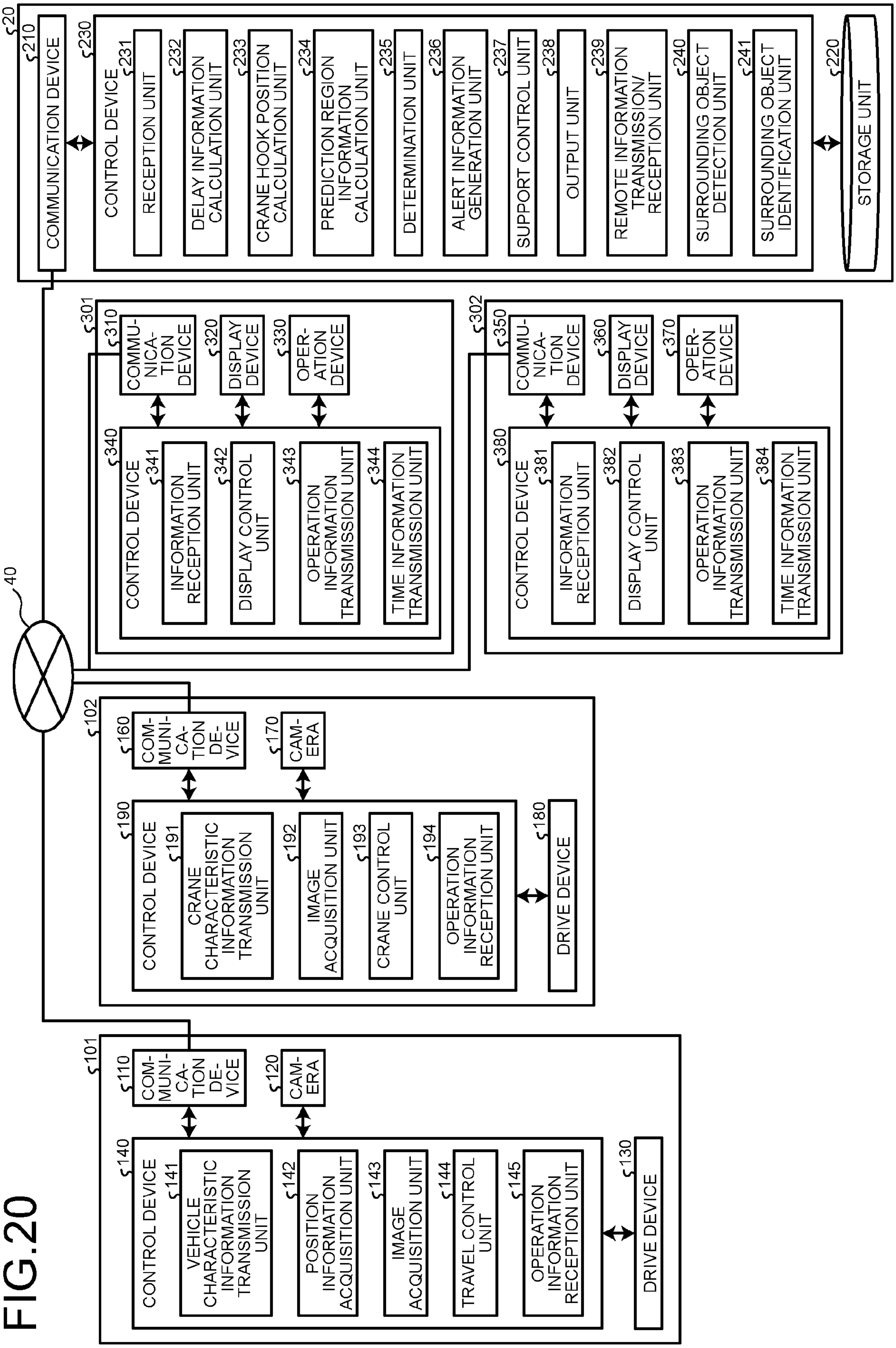
20
210
COMMUNICATION DEVICE
230
CONTROL DEVICE
231
RECEPTION UNIT
232
DELAY INFORMATION CALCULATION UNIT
233
CRANE HOOK POSITION CALCULATION UNIT
234
PREDICTION REGION INFORMATION CALCULATION UNIT
235
DETERMINATION UNIT
236
ALERT INFORMATION GENERATION UNIT
237
SUPPORT CONTROL UNIT
238
OUTPUT UNIT
239
REMOTE INFORMATION TRANSMISSION/ RECEPTION UNIT
240
SURROUNDING OBJECT DETECTION UNIT
241
SURROUNDING OBJECT IDENTIFICATION UNIT
220
STORAGE UNIT
301
310
COMMU-NICA-TION DEVICE
320
DISPLAY DEVICE
330
OPER-ATION DEVICE
340
CONTROL DEVICE
341
INFORMATION RECEPTION UNIT
342
DISPLAY CONTROL UNIT
343
OPERATION INFORMATION TRANSMISSION UNIT
344
TIME INFORMATION TRANSMISSION UNIT
302
350
COMMU-NICA-TION DEVICE
360
DISPLAY DEVICE
370
OPER-ATION DEVICE
380
CONTROL DEVICE
381
INFORMATION RECEPTION UNIT
382
DISPLAY CONTROL UNIT
383
OPERATION INFORMATION TRANSMISSION UNIT
384
TIME INFORMATION TRANSMISSION UNIT
40
102
160
COM-MUNI-CA-TION DE-VICE
170
CAM-ERA
190
CONTROL DEVICE
191
CRANE CHARACTERISTIC INFORMATION TRANSMISSION UNIT
192
IMAGE ACQUISITION UNIT
193
CRANE CONTROL UNIT
194
OPERATION INFORMATION RECEPTION UNIT
180
DRIVE DEVICE
101
110
COM-MUNI-CA-TION DE-VICE
120
CAM-ERA
140
CONTROL DEVICE
141
VEHICLE CHARACTERISTIC INFORMATION TRANSMISSION UNIT
142
POSITION INFORMATION ACQUISITION UNIT
143
IMAGE ACQUISITION UNIT
144
TRAVEL CONTROL UNIT
145
OPERATION INFORMATION RECEPTION UNIT
130
DRIVE DEVICE

# FIG.21

T4

| VEHICLE ID | x [m] | y [m] | ψ [deg] |
|---|---|---|---|
| 10 | 12.3 | 34.5 | 0.1 |
| 11 | 22.3 | 54.5 | 1.3 |
| 12 | – | – | – |

# FIG.22

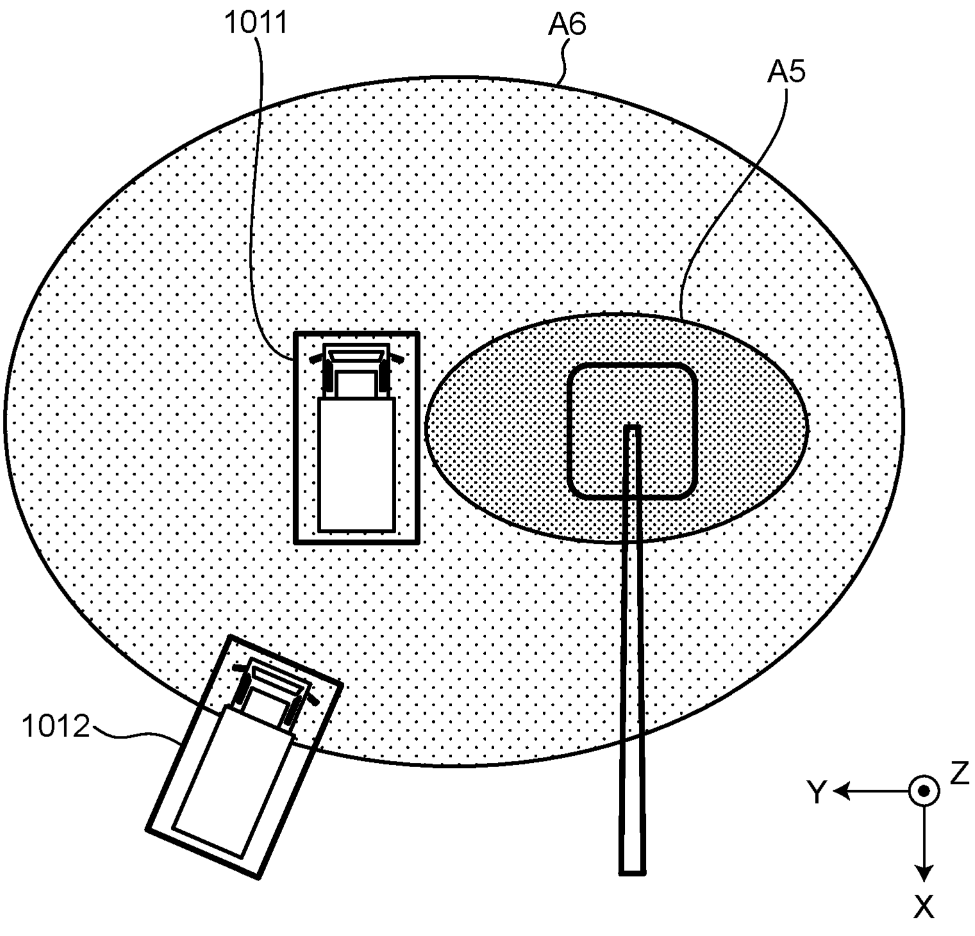

FIG.23

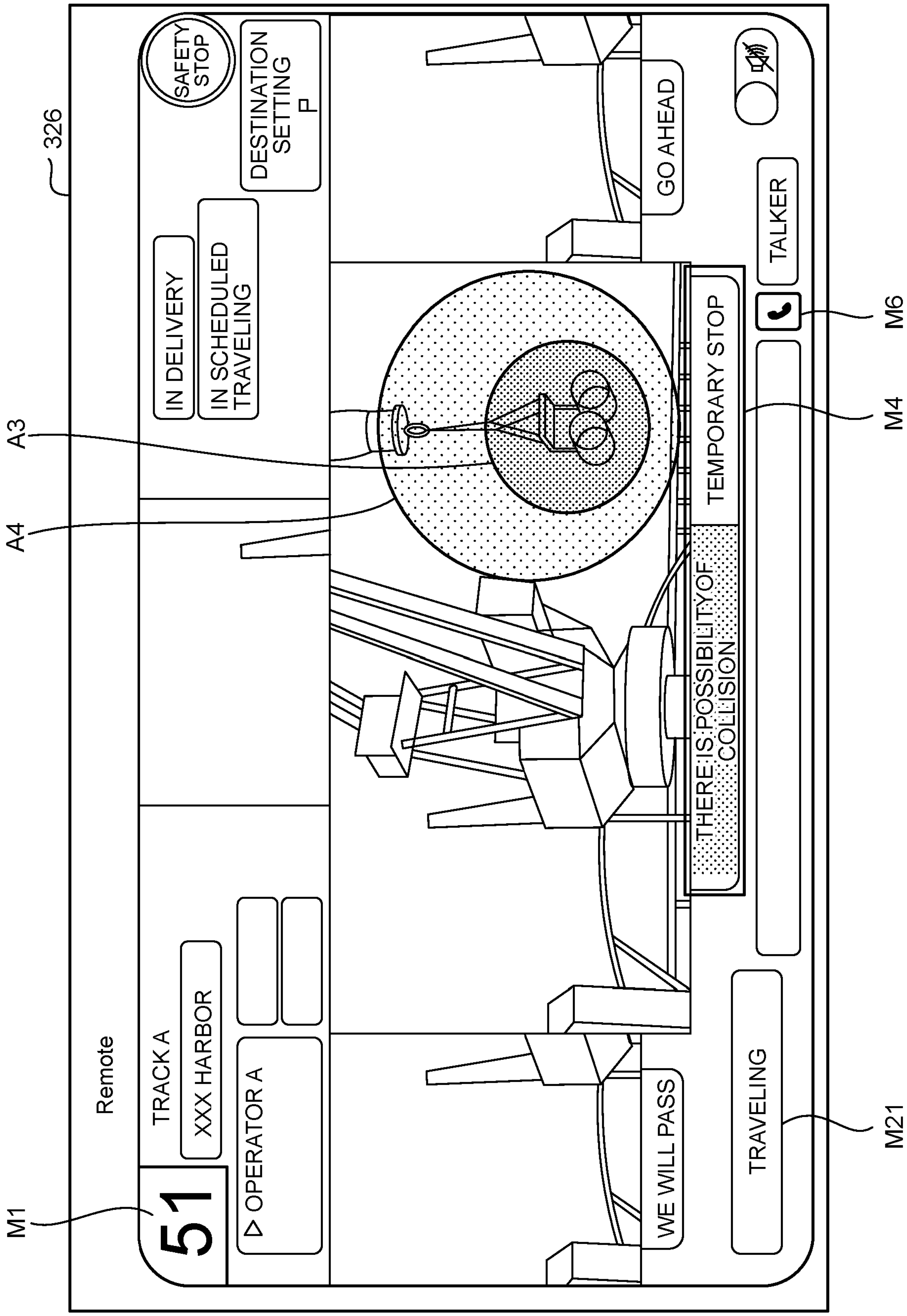
326
SAFETY STOP
DESTINATION SETTING
P
IN DELIVERY
IN SCHEDULED TRAVELING
GO AHEAD
TALKER
TEMPORARY STOP
THERE IS POSSIBILITY OF COLLISION
Remote
TRACK A
XXX HARBOR
51
OPERATOR A
WE WILL PASS
TRAVELING
A3
A4
M1
M4
M6
M21

FIG.24

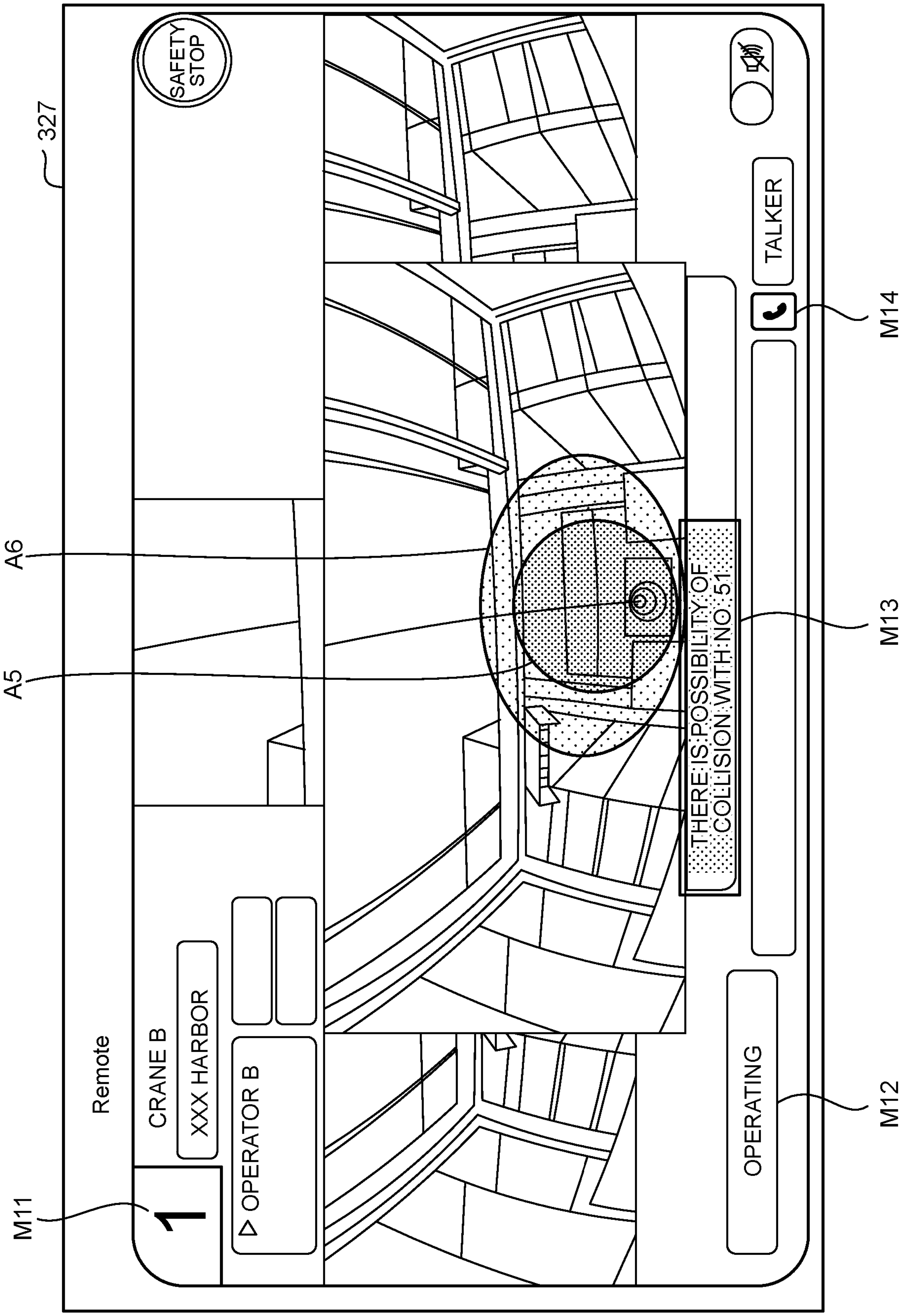
327
SAFETY STOP
TALKER
M14
A6
A5
M13
THERE IS POSSIBILITY OF COLLISION WITH NO. 51
Remote
CRANE B
XXX HARBOR
OPERATOR B
1
M11
OPERATING
M12

FIG.25

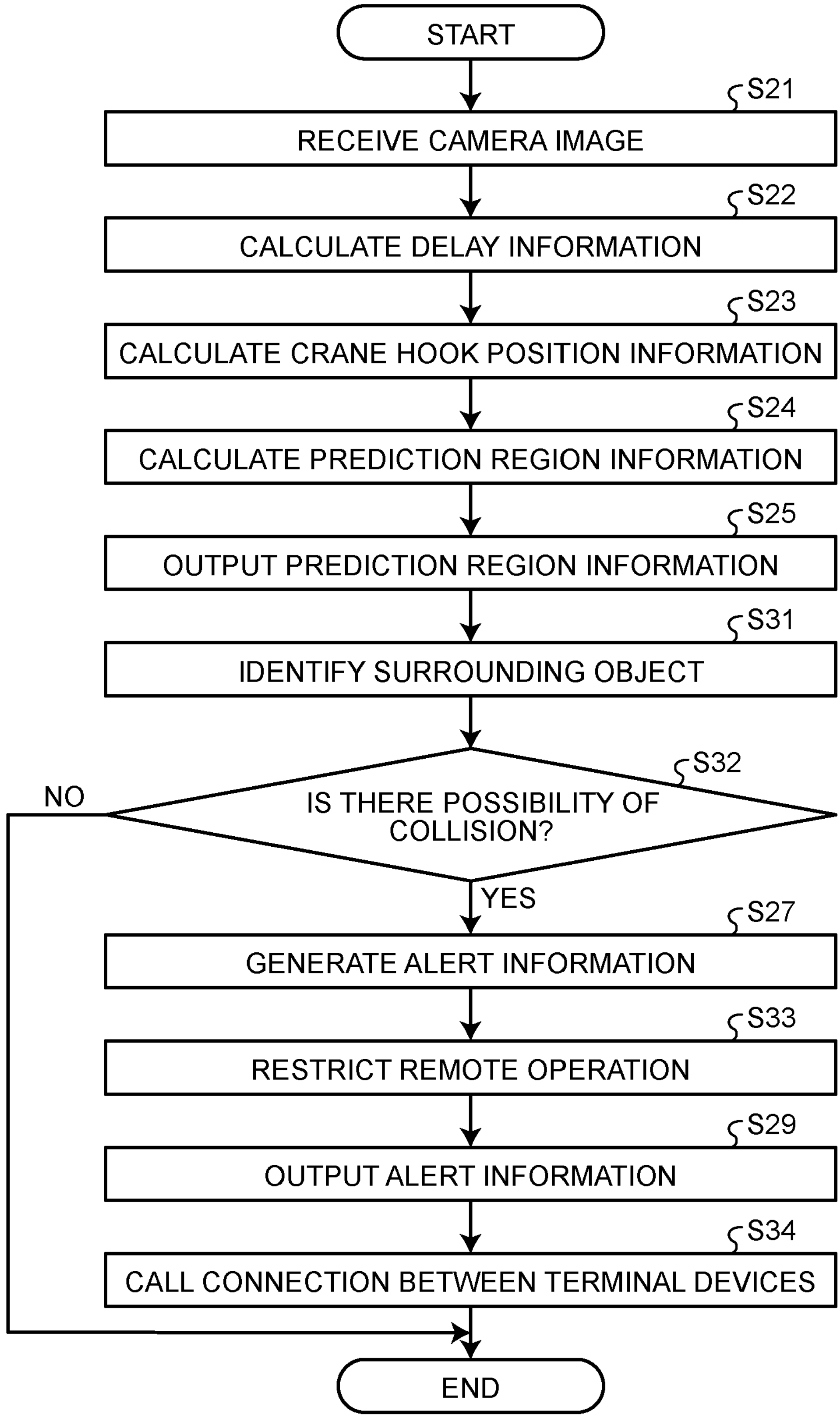
START
S21
RECEIVE CAMERA IMAGE
S22
CALCULATE DELAY INFORMATION
S23
CALCULATE CRANE HOOK POSITION INFORMATION
S24
CALCULATE PREDICTION REGION INFORMATION
S25
OUTPUT PREDICTION REGION INFORMATION
S31
IDENTIFY SURROUNDING OBJECT
S32
IS THERE POSSIBILITY OF COLLISION?
NO
YES
S27
GENERATE ALERT INFORMATION
S33
RESTRICT REMOTE OPERATION
S29
OUTPUT ALERT INFORMATION
S34
CALL CONNECTION BETWEEN TERMINAL DEVICES
END

FIG.26

T5

| | WAITING FOR ENTRY | WAITING FOR LOADING | OTHERS |
|---|---|---|---|
| STATE OF ENTERING VEHICLE | 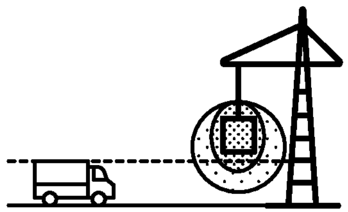 | 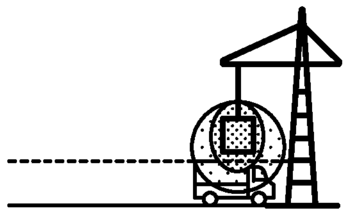 | 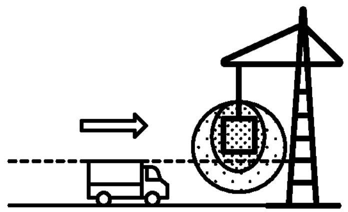 |
| TERMINAL DEVICE 301 | NOT ALLOWED TO ENTER | NOT ALLOWED TO START | STOP |
| TERMINAL DEVICE 302 | PULL UP HOOK | OPERATE WITH CAUTION BECAUSE YOU ARE APPROACHING VEHICLE | PULL UP HOOK |

FIG.27

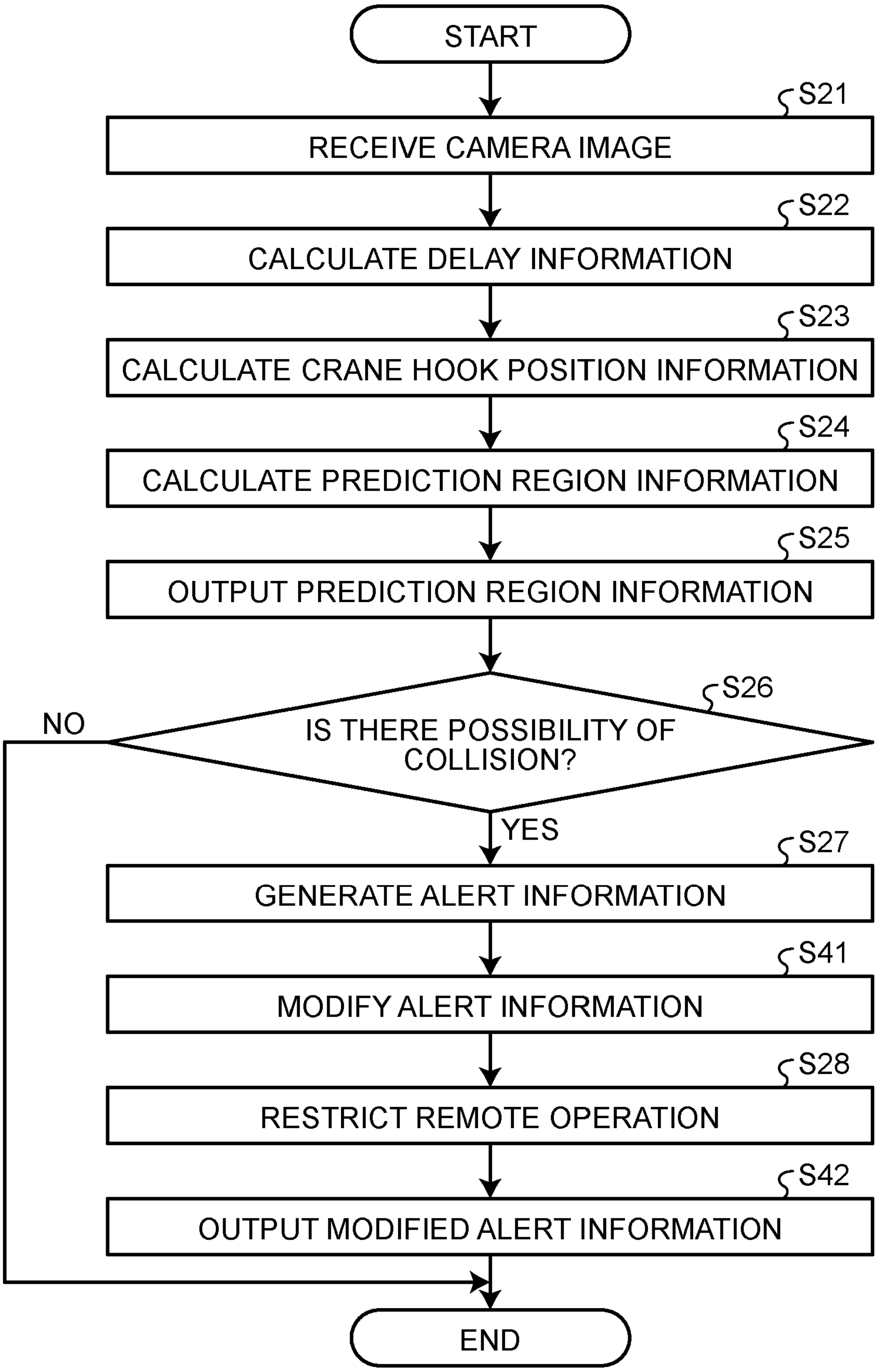
START
S21
RECEIVE CAMERA IMAGE
S22
CALCULATE DELAY INFORMATION
S23
CALCULATE CRANE HOOK POSITION INFORMATION
S24
CALCULATE PREDICTION REGION INFORMATION
S25
OUTPUT PREDICTION REGION INFORMATION
S26
IS THERE POSSIBILITY OF COLLISION?
NO
YES
S27
GENERATE ALERT INFORMATION
S41
MODIFY ALERT INFORMATION
S28
RESTRICT REMOTE OPERATION
S42
OUTPUT MODIFIED ALERT INFORMATION
END

FIG.28

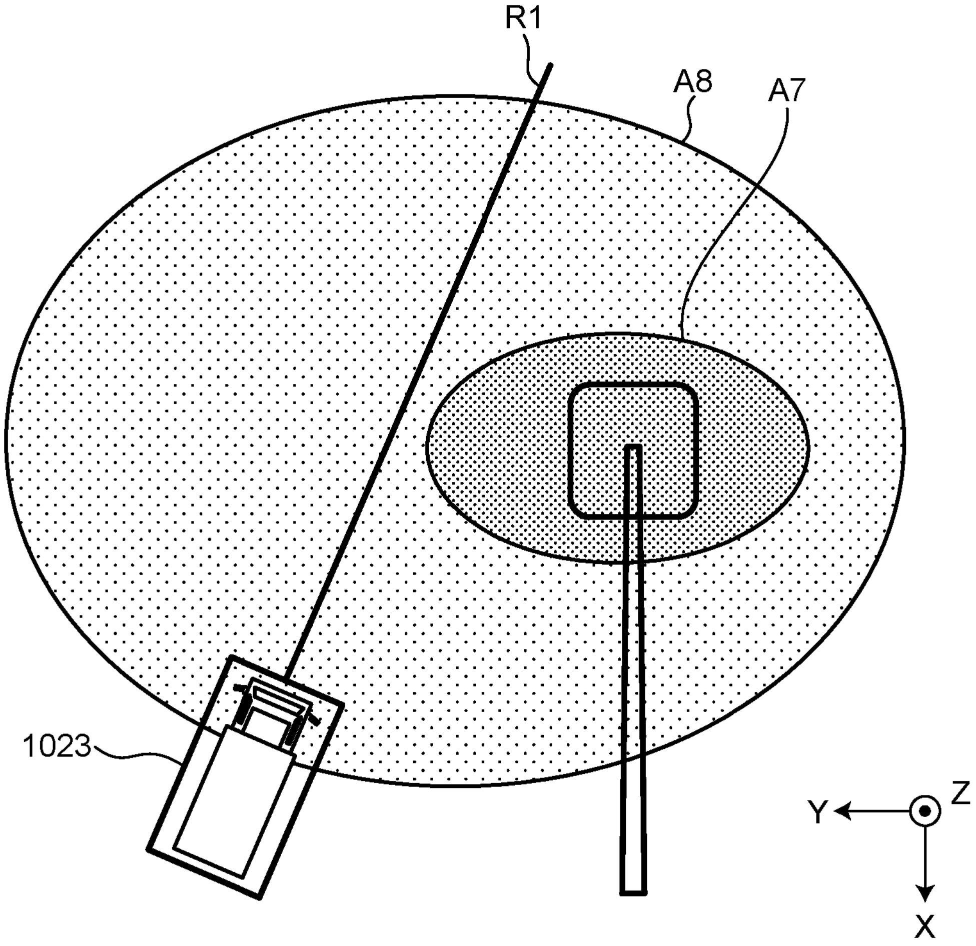

FIG.29

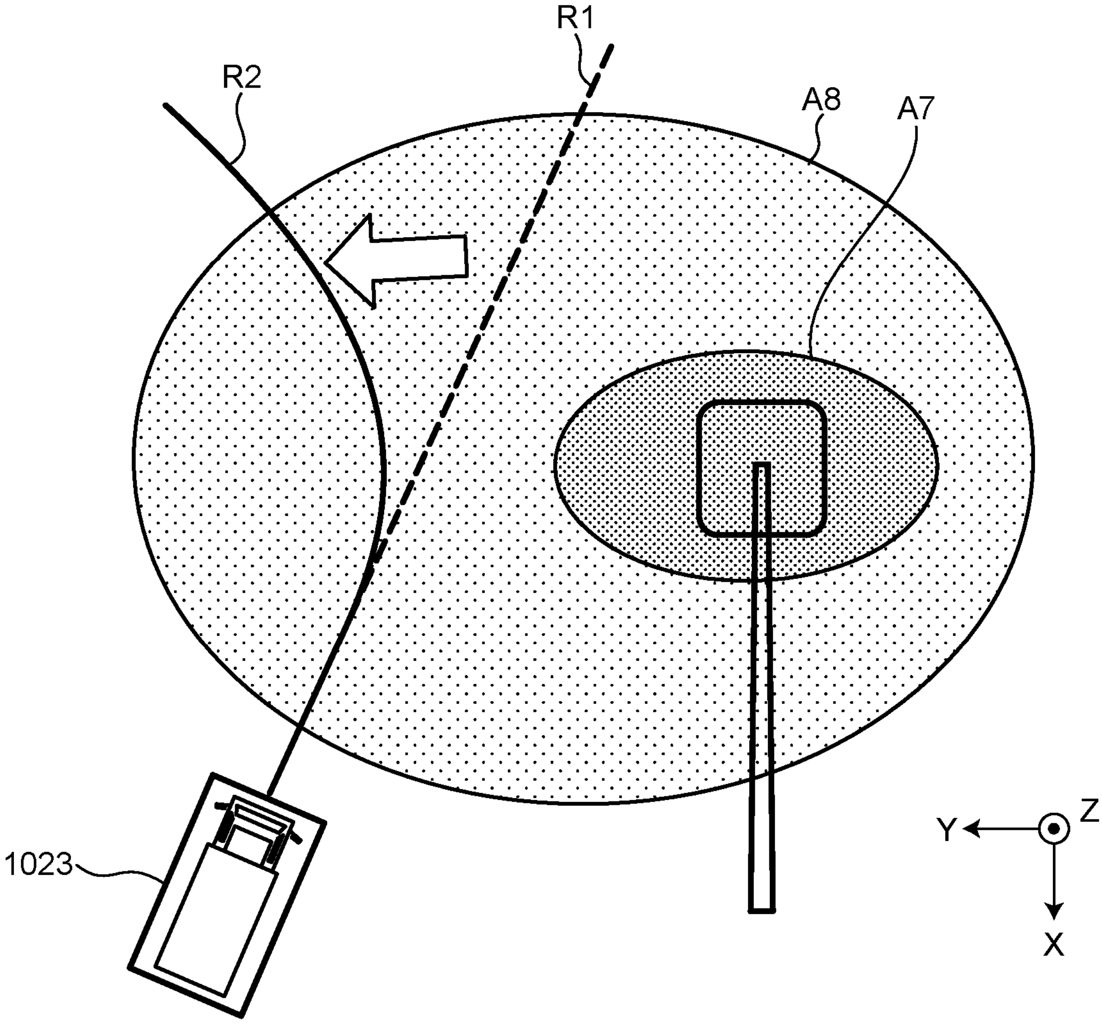

FIG.30

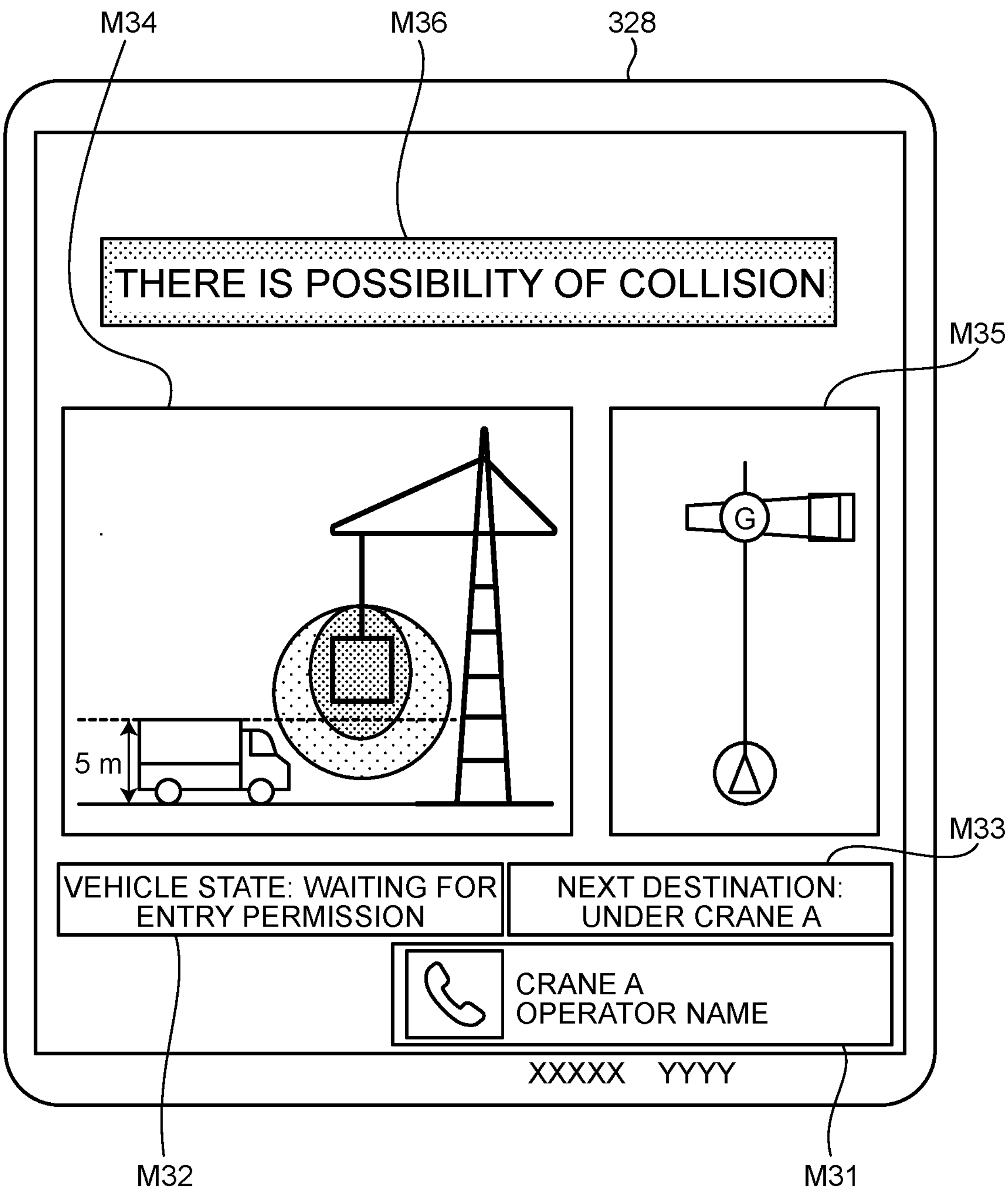
M34
M36
328
THERE IS POSSIBILITY OF COLLISION
M35
G
5 m
M33
VEHICLE STATE: WAITING FOR ENTRY PERMISSION
NEXT DESTINATION: UNDER CRANE A
CRANE A
OPERATOR NAME
XXXXX YYYY
M32
M31

FIG.31

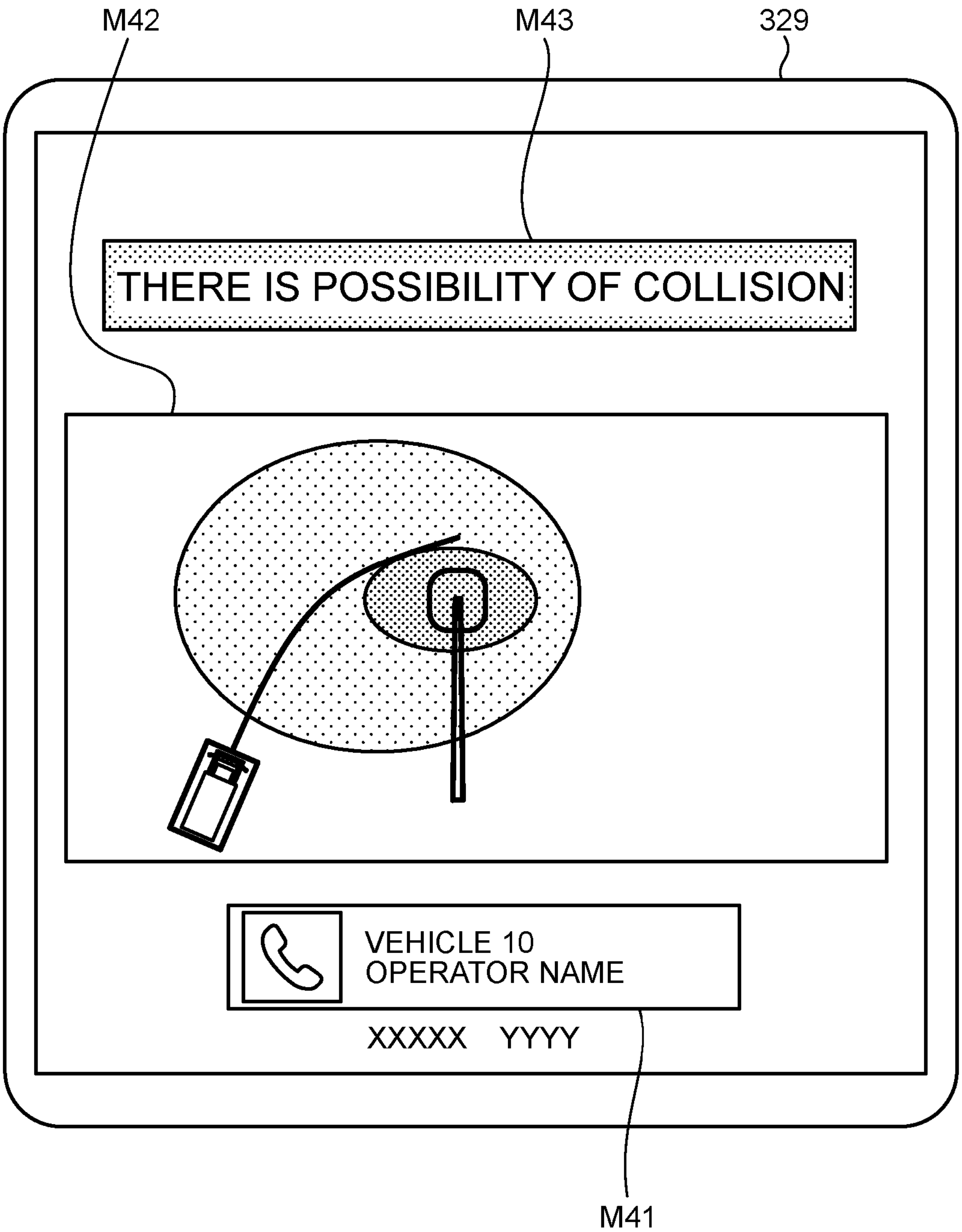
M42
M43
329
THERE IS POSSIBILITY OF COLLISION
VEHICLE 10
OPERATOR NAME
XXXXX YYYY
M41

FIG.32

T7

| STATE OF CRANE | OUTRIGGER UNDEPLOYED | OUTRIGGER DEPLOYED WITH LOAD | OUTRIGGER DEPLOYED WITHOUT LOAD |
|---|---|---|---|
| TERMINAL DEVICE 302 | DEPLOY OUTRIGGER | OPERATE WITH CAUTION BECAUSE YOU ARE APPROACHING VEHICLE | PULL UP HOOK |

FIG.33

T8

| STATE OF CRANE | WITHOUT LOAD | WITH LOAD GROUND PRESSURE GAUGE VALUE ABNORMAL | WITH LOAD GROUND PRESSURE GAUGE VALUE NORMAL |
|---|---|---|---|
| TERMINAL DEVICE 302 | OPERATE WITH CAUTION BECAUSE YOU ARE APPROACHING VEHICLE | THERE IS ANOMALY IN GROUND SURFACE, DROP OUT CARGO | PULL UP HOOK |

# FIG.34

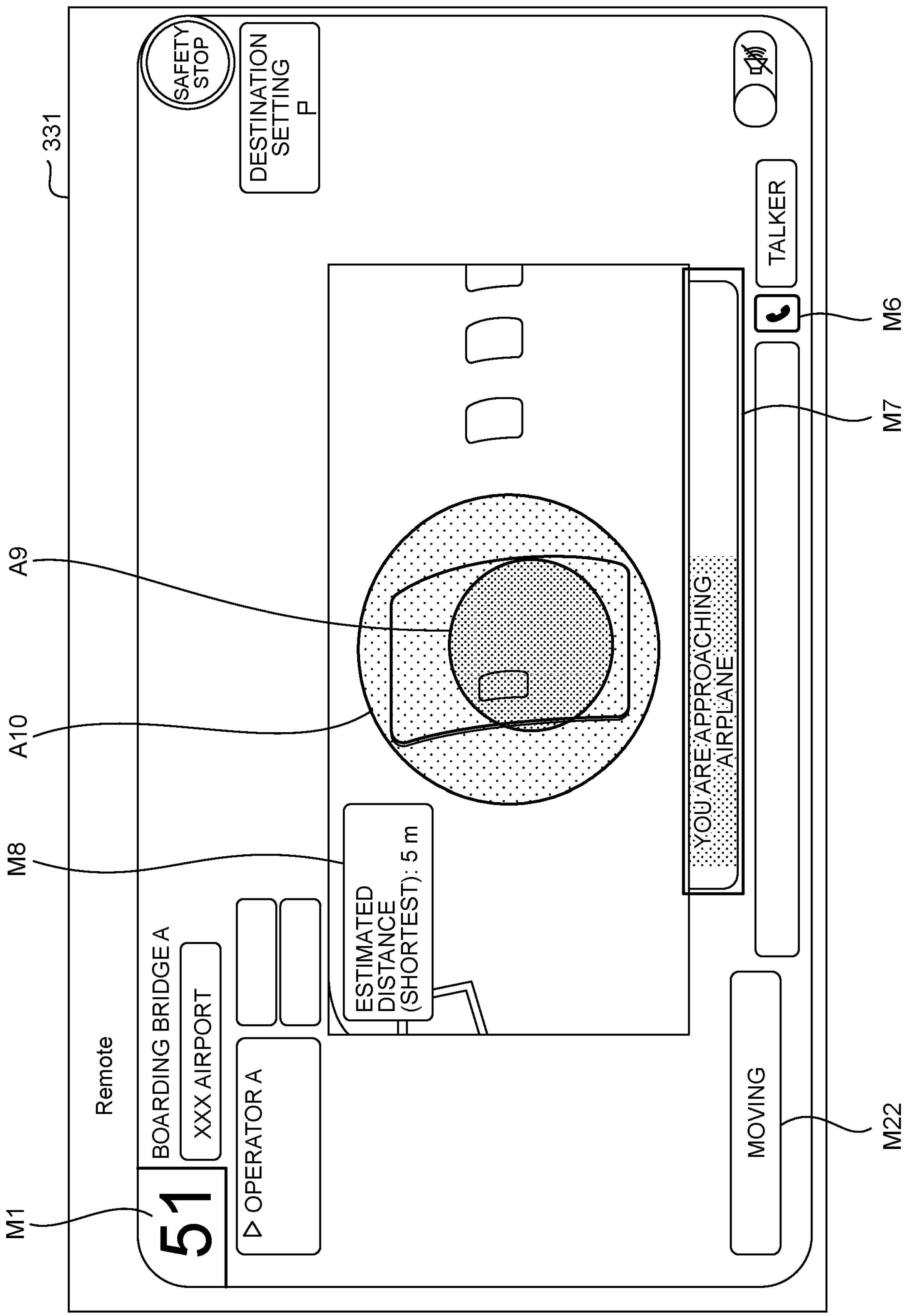
331
SAFETY STOP
DESTINATION SETTING P
TALKER
M6
M7
A9
A10
M8
YOU ARE APPROACHING AIRPLANE
ESTIMATED DISTANCE (SHORTEST): 5 m
Remote
51
BOARDING BRIDGE A
XXX AIRPORT
▷ OPERATOR A
M1
MOVING
M22

FIG.35

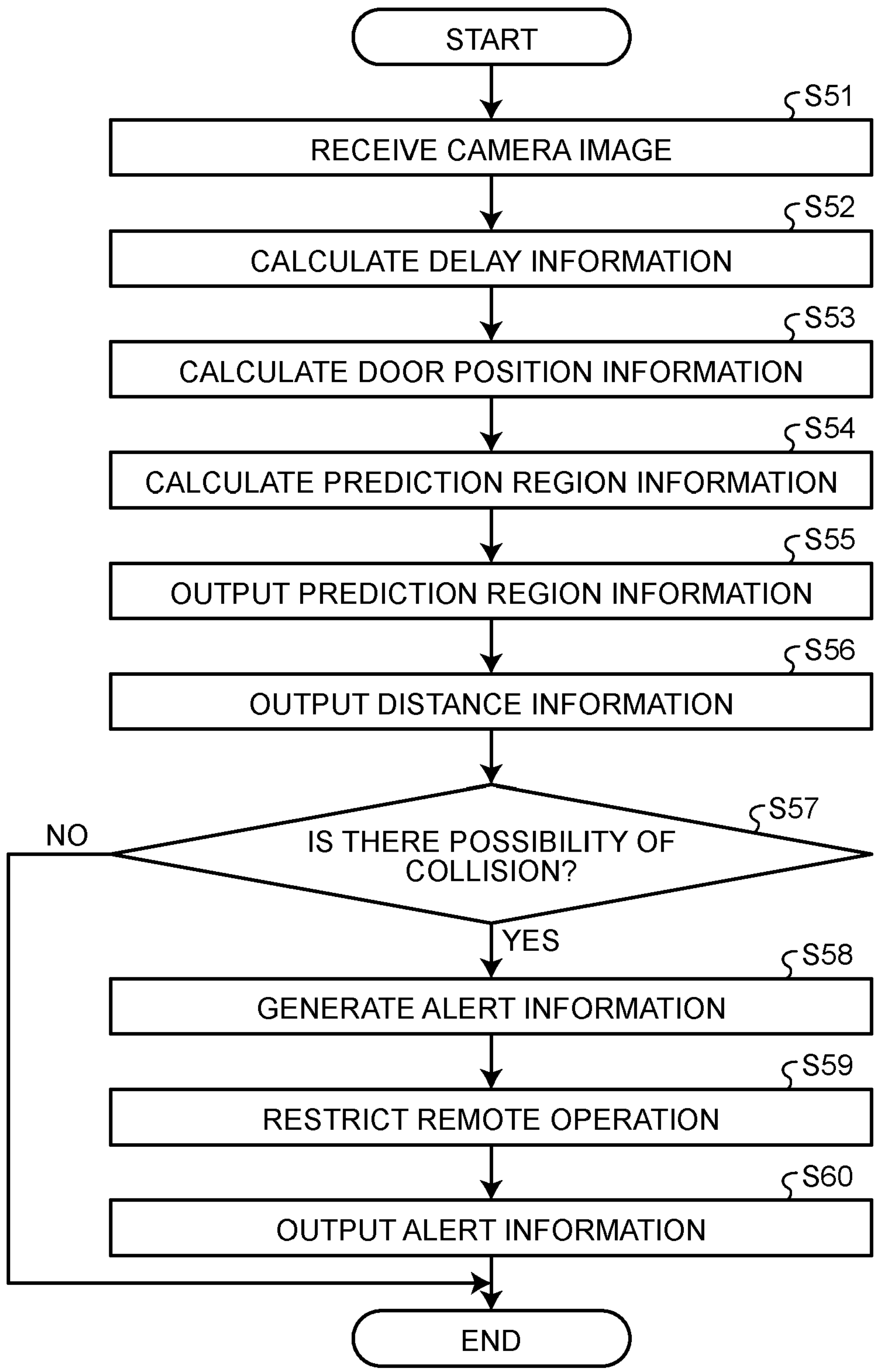
START
S51
RECEIVE CAMERA IMAGE
S52
CALCULATE DELAY INFORMATION
S53
CALCULATE DOOR POSITION INFORMATION
S54
CALCULATE PREDICTION REGION INFORMATION
S55
OUTPUT PREDICTION REGION INFORMATION
S56
OUTPUT DISTANCE INFORMATION
S57
IS THERE POSSIBILITY OF COLLISION?
NO
YES
S58
GENERATE ALERT INFORMATION
S59
RESTRICT REMOTE OPERATION
S60
OUTPUT ALERT INFORMATION
END

FIG.36

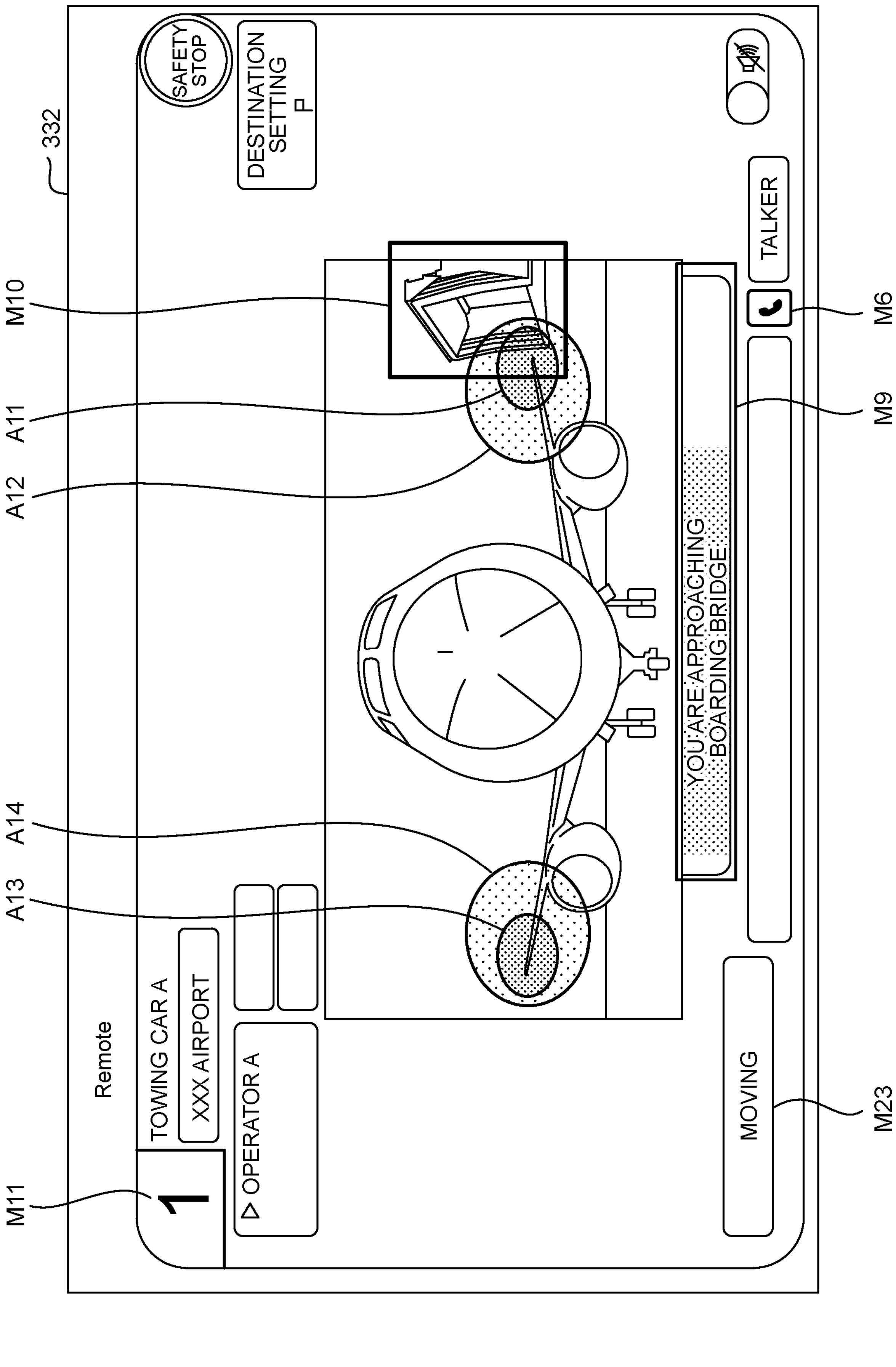
332
M10
A11
A12
A14
A13
M11
M6
M9
M23
SAFETY STOP
DESTINATION SETTING
P
TALKER
YOU ARE APPROACHING BOARDING BRIDGE
Remote
1
TOWING CAR A
XXX AIRPORT
OPERATOR A
MOVING

FIG.37

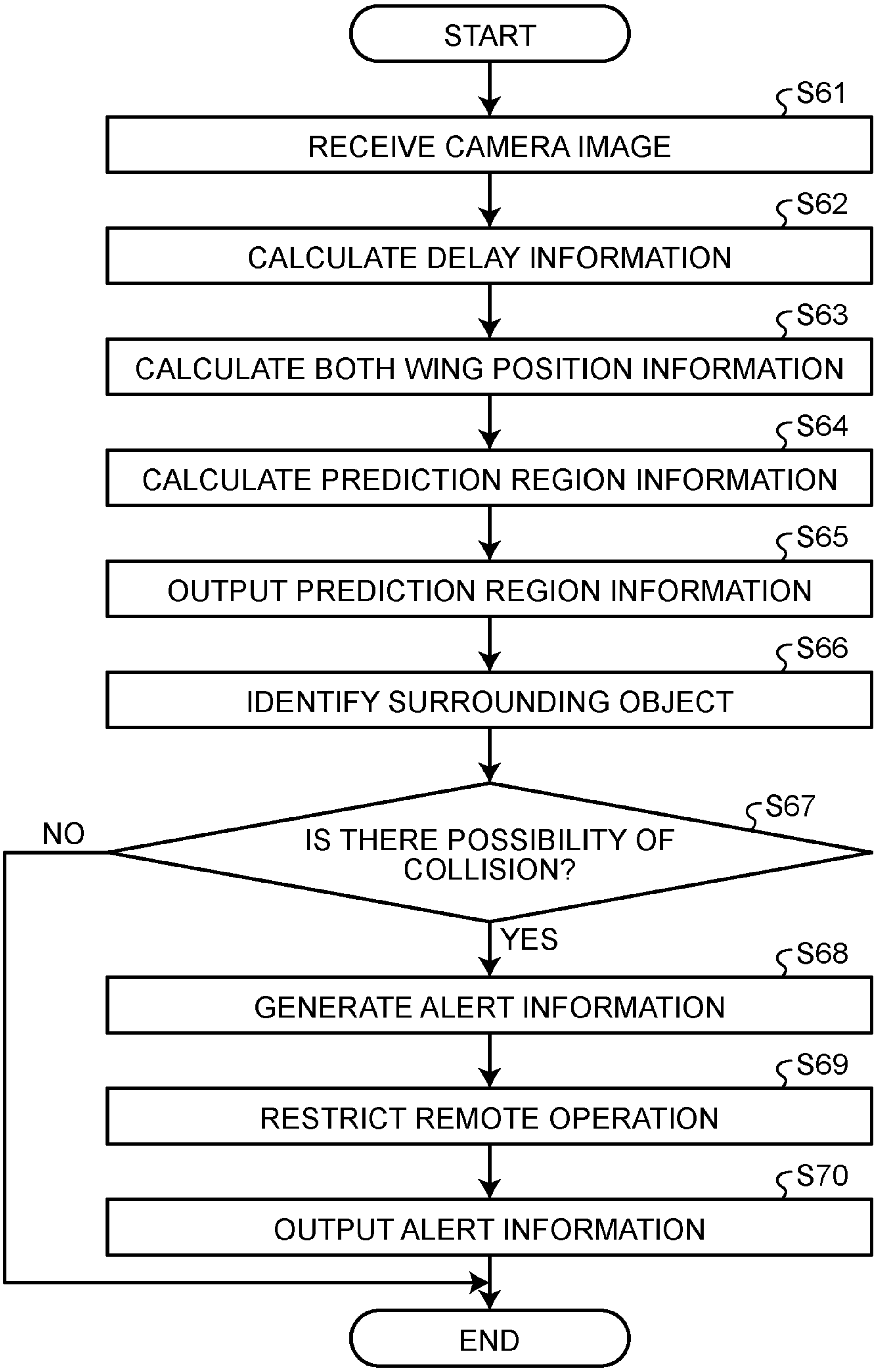
START
S61
RECEIVE CAMERA IMAGE
S62
CALCULATE DELAY INFORMATION
S63
CALCULATE BOTH WING POSITION INFORMATION
S64
CALCULATE PREDICTION REGION INFORMATION
S65
OUTPUT PREDICTION REGION INFORMATION
S66
IDENTIFY SURROUNDING OBJECT
S67
IS THERE POSSIBILITY OF COLLISION?
NO
YES
S68
GENERATE ALERT INFORMATION
S69
RESTRICT REMOTE OPERATION
S70
OUTPUT ALERT INFORMATION
END

Europäisches Patentamt
European Patent Office
Office européen des brevets

# EUROPEAN SEARCH REPORT

Application Number
EP 25 15 6746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHETTY NIHAL PATTAN ET AL: "Enhancing Construction Site Safety: A Tripartite Analysis of Safety Violations", 2024 3RD INTERNATIONAL CONFERENCE FOR INNOVATION IN TECHNOLOGY (INOCON), IEEE, 1 March 2024 (2024-03-01), pages 1-6, XP034599382, DOI: 10.1109/INOCON60754.2024.10511598 [retrieved on 2024-05-06] * the whole document * ----- | 1-14 | INV. G06V20/56 G06V20/58 G06V10/62 B66C13/46 G06T7/277 |
| X | ZHAO LIN ET AL: "Remote Driving of Road Vehicles: A Survey of Driving Feedback, Latency, Support Control, and Real Applications", IEEE TRANSACTIONS ON INTELLIGENT VEHICLES, IEEE, vol. 9, no. 10, 6 February 2024 (2024-02-06), pages 6086-6107, XP034916850, ISSN: 2379-8858, DOI: 10.1109/TIV.2024.3362597 [retrieved on 2024-02-06] * the whole document * ----- | 1,2, 12-14 | TECHNICAL FIELDS SEARCHED (IPC) G06T B66F B66C G06V |
| X | KATSUYAMA YUTAKA ET AL: "A Predictive Approach for Compensating Transmission Latency in Remote Robot Control for Improving Teleoperation Efficiency", GLOBECOM 2023 - 2023 IEEE GLOBAL COMMUNICATIONS CONFERENCE, IEEE, 4 December 2023 (2023-12-04), pages 6934-6939, XP034555637, DOI: 10.1109/GLOBECOM54140.2023.10437076 [retrieved on 2024-02-26] * the whole document * ----- -/-- | 1,12,14 | |

The present search report has been drawn up for all claims

2

| Place of search | Date of completion of the search | Examiner |
|---|---|---|
| The Hague | 15 July 2025 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 15 6746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FARAJIPARVAR PARINAZ ET AL: "A Brief Survey of Telerobotic Time Delay Mitigation", FRONTIERS IN ROBOTICS AND AI, vol. 7, 15 December 2020 (2020-12-15), XP093291862, ISSN: 2296-9144, DOI: 10.3389/frobt.2020.578805 Retrieved from the Internet: URL:https://www.frontiersin.org/journals/robotics-and-ai/articles/10.3389/frobt.2020.578805/full> * the whole document * ----- | 1-14 | |
| A | PRICE LEON C ET AL: "Multisensor-driven real-time crane monitoring system for blind lift operations: Lessons learned from a case study", AUTOMATION IN CONSTRUCTION, ELSEVIER, AMSTERDAM, NL, vol. 124, 23 January 2021 (2021-01-23), XP086500897, ISSN: 0926-5805, DOI: 10.1016/J.AUTCON.2021.103552 [retrieved on 2021-01-23] * the whole document * ----- | 1-14 | |

TECHNICAL FIELDS SEARCHED (IPC)

The present search report has been drawn up for all claims

2

| Place of search | Date of completion of the search | Examiner |
|---|---|---|
| The Hague | 15 July 2025 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000313588 A
- JP 7070802 B
- JP 2019156527 A
- JP 2005145632 A
- JP 2007031102 A
- WO 2017135382 A
- JP 2023079739 A